(19) Europäisches Patentamt
European Patent Office
Office européen des brevets

(11) EP 1 692 223 B1

(12) **EUROPEAN PATENT SPECIFICATION**

(45) Date of publication and mention of the grant of the patent:
**08.04.2015 Bulletin 2015/15**

(21) Application number: **04795764.2**

(22) Date of filing: **20.10.2004**

(51) Int Cl.:
***C08L 23/10*** *(2006.01)* ***B32B 5/24*** *(2006.01)*
***B32B 27/32*** *(2006.01)*

(86) International application number:
**PCT/US2004/034648**

(87) International publication number:
**WO 2005/052052 (09.06.2005 Gazette 2005/23)**

(54) **ELASTIC NONWOVEN FABRICS MADE FROM BLENDS OF POLYOLEFINS AND PROCESSES FOR MAKING THE SAME**

ELASTISCHE VLIESSTOFFE AUS MISCHUNGEN VON POLYOLEFINEN UND HERSTELLUNGSVERFAHREN DAFÜR

TEXTILES NON TISSES ELASTIQUES FABRIQUES A PARTIR DE MELANGES DE POLYOLEFINES ET LEURS PROCEDES DE FABRICATION

(84) Designated Contracting States:
**AT BE BG CH CY CZ DE DK EE ES FI FR GB GR HU IE IT LI LU MC NL PL PT RO SE SI SK TR**

(30) Priority: **18.11.2003 US 716306**

(43) Date of publication of application:
**23.08.2006 Bulletin 2006/34**

(73) Proprietor: **ExxonMobil Chemical Patents Inc.**
**Baytown, TX 77520 (US)**

(72) Inventors:
- **CHENG, Chia, Y.**
  **Seabrook, TX 77586 (US)**
- **IYER, Srivatsan Srinivas**
  **Pearland, TX 77584 (US)**
- **DATTA, Sudhin**
  **Houston, TX 77007 (US)**

(74) Representative: **Mareschal, Anne et al**
**ExxonMobil Chemical Europe Inc.**
**IP Law Europe**
**Hermeslaan 2**
**1831 Machelen (BE)**

(56) References cited:
**EP-A- 0 462 574** **WO-A-00/70134**
**US-A- 5 994 482** **US-B1- 6 342 565**
**US-B1- 6 583 076**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 692 223 B1

## Description

FIELD OF THE INVENTION

The invention relates to improved elastic nonwoven fabrics made from blends of polyolefins. In particular, the invention relates to improved elastic nonwoven fabrics made from a blend of a propylene polymer components wherein at least one of the components has undergone molecular degradation.

BACKGROUND

The use of isotactic polypropylene and ethylene/propylene copolymers to produce fibers and nonwoven fabrics is known. Additionally, blending these polymers with other polymers has also been the subject of past endeavors.

For example, U.S. Patent No. 3,262,992 suggests the addition of a stereoblock copolymer of ethylene and propylene to isotactic polypropylene leads to improved mechanical properties of the blend compared to isotactic polypropylene alone.

U.S. Patent Nos. 3,853,969 and 3,378,606, suggest the formation of *in situ* blends of isotactic polypropylene and "stereo block" copolymers of propylene and another olefin of 2 to 12 carbon atoms, including ethylene and hexene.

U.S. Patent No. 3,882,197 suggests blends of stereoregular propylene/alpha-olefin copolymers, stereoregular propylene, and ethylene copolymer rubbers.

U.S. Patent No. 3,888,949 suggests the synthesis of blend compositions containing isotactic polypropylene and copolymers of propylene and an alpha-olefin, containing between 6 - 20 carbon atoms, which have improved elongation and tensile strength over either the copolymer or isotactic polypropylene. Copolymers of propylene and alpha-olefin are described wherein the alpha-olefin is hexene, octene or dodecene.

U.S. Patent No. 4,461,872, discloses a blend produced in part by the use of another heterogeneous catalyst system which is expected to form copolymers which have statistically significant intermolecular and intramolecular compositional differences.

Two publications in the journal of Macromolecules, 1989, V22, pages 3851-3866 described blends of isotactic polypropylene and partially atactic polypropylene which purportedly have desirable tensile elongation properties.

U.S. Patent Nos. 5,723,217; 5,726,103; 5,736,465; 5,763,080; and 6,010,588 suggest several metallocene catalyzed processes to make polypropylene to produce fibers and fabric. U.S. Patent No. 5,891,814, discloses a dual metallocene-generated propylene polymer used to make spunbond fibers. WO 99/19547 discloses a method for producing spunbonded fibers and fabric derived from a blend of a propylene homopolymer and a copolymer of polypropylene.

U.S. Patent No. 6,342,565 discloses a fiber or nonwoven fabric comprising a blend of a first polymer component (FPC) present in said fiber in the range of from 75-98 weight percent, based on the total weight of said polyolefins; wherein said FPC has a melting point as determined by differential scanning calorimetry (DSC) in the range of from 25-70°C; wherein said FPC has a heat of fusion less than 25 J/g; wherein said FPC is a propylene-ethylene polymer having said propylene present in said FPC at 80 weight percent or greater, having said ethylene present at 20 weight percent or less; and a second polymer component (SPC) present in said fiber in the range of from 2-25 weight percent based on the total polymer in said fiber, the remainder of said fiber being made up of said FPC; wherein said SPC is a stereoregular isotactic polypropylene, wherein said SPC has a melting point as determined by DSC greater than 130°C, and a heat of fusion greater than 120 J/g; wherein said fiber exhibits a resistance to set equal to or less than 80% from a 400% tensile deformation, and wherein said blend of polyolefins in said fiber has a flexural modulus less than or equal to 12,000 psi in/in.

Other background references include WO 03/040202, EP A 0462574, US B 5683076, US A 5994482, WO 0070134, EP 0462574 and US 5683076.

However, these past endeavors have generally taught that fabricating a nonwoven fabric from a fiber will result in an inelastic nonwoven fabric due to the nature of the processing conditions. It is generally understood that the application of shear during processing operations tends to straighten out polymer molecules. When the shearing process ceases, the molecules, providing they are still molten, tend to coil up again. As such, additional processing steps such as annealing are generally required to obtain at least one of desirable elasticity, desirable elongation, and/or desirable permanent set for certain end use applications. Therefore, there remains a need for elastic nonwoven fabrics made from blends of polyolefins having such properties and being obtainable by processes that require little to no post fabrication processing such as annealing.

SUMMARY

The present invention provides a nonwoven fabric made from a blend comprising: a first component comprising from 50% to 99% by weight based on the total weight of the blend composition of a random copolymer of propylene

comprising 72 wt% to 90 wt% of propylene derived units and 10 wt% to 28 wt% of ethylene derived units, the copolymer having a heat of fusion as determined by DSC of less than 50 J/g and stereoregular propylene crystallinity; and
a second component comprising from 50% to 1% by weight based on the total weight of the blend composition of a propylene polymer or blends of propylene polymers, the propylene polymer or the blends of propylene polymers having a heat of fusion as determined by DSC of greater than 60 J/g;
wherein the blend has a melting point between 80°C and 100°C, and wherein the blend has undergone chain scission, the chain scissioned blend having a MFR of 50dg/min. or greater (according to ASTM D-1238 (230°C, 2.16 kg)), and wherein the nonwoven fabric has a permanent set {100x(D0-D2)/D0} of from less than 60%.

In another embodiment, the invention generally relates to a laminate comprising a nonwoven fabric comprising a layer made from a composition comprising: a first component comprising a polymer selected from the group consisting of homopolymers of propylene and random copolymers of propylene, wherein the polymer has a heat of fusion as determined by DSC of less than 50 J/g and stereoregular propylene crystallinity; and a second component comprising a propylene polymer.

In yet another embodiment, the invention generally relates to an article or an article component comprising a nonwoven fabric made from a composition comprising: a first component comprising a polymer selected from the group consisting of homopolymers of propylene and random copolymers of propylene, wherein the polymer has a heat of fusion as determined by DSC of from 1 J/g to 50 J/g and stereoregular propylene crystallinity; and a second component comprising a propylene polymer.

The invention provides a process for producing a nonwoven fabric, the process comprising:

a) combining

i) blending a first component comprising from 50% to 99% by weight based on the total weight of the blend composition of a random copolymer of propylene comprising 72 wt% to 90 wt% of propylene derived units and 10 wt% to 28 wt% of ethylene derived units, the polymer having a heat of fusion as determined by DSC of less than 50 J/g and stereoregular propylene crystallinity; and
ii) a second component comprising from 50% to 1% by weight based on the total weight of the blend composition of a propylene polymer or blends of propylene polymers having a heat of fusion (DSC) of greater than 60 J/g; and
iii) a free radical initiator,

to form a blend, wherein the blend has a MFR of 50 dg//min. or greater (according to ASTM D-1238 (230°C, 2.16 kg)) and a melting point between 80°C and 100°C; and
b) extruding the blend to form a plurality of fibers to form a web; and
c) calendering the web to form the nonwoven fabric having a permanent set {100x(D0-D2)/D0} of from less than 60%.

The invention further provides a process for producing a nonwoven fabric, the process comprising:

a) combining free radical initiator with a first component comprising from 50% to 99% by weight based on the total weight of the blend composition of a random copolymer of propylene comprising 72 wt% to 90 wt% of propylene derived units and 10 wt% to 28 wt% of ethylene derived units, the polymer having a heat of fusion as determined by DSC of less than 50 J/g and stereoregular propylene crystallinity;
b) blending the first component with a second component comprising from 50% to 1% by weight based on the total weight of the blend composition of a propylene polymer or blends of propylene polymers having a heat of fusion (DSC) of greater than 60 J/g; to form a blend composition, wherein the blend has a melting point between 80°C and 100°C;
c) extruding the blend to form a plurality of fibers to form a web; and calendering the web to form the nonwoven fabric.

In another embodiment, the invention generally relates to a laminate of a blend comprising first polymer component and the second polymer whereas at least one of these components has undergone chain scission. The nonwoven fabric comprising a layer made from a composition comprising: a first component comprising a polymer selected from the group consisting of homopolymers of propylene and random copolymers of propylene, wherein the polymer has a heat of fusion as determined by DSC of less than 50 J/g and stereoregular propylene crystallinity; and a second component comprising a propylene polymer.

In yet another embodiment, the invention generally relates to an article or articles blend comprising a nonwoven fabric made from a composition containing a first polymer component and a second polymer whereas at least one of these components has undergone chain scission. The composition comprising: a first component comprising a polymer-selected from the group consisting of homopolymers of propylene and random copolymers of propylene, wherein the polymer has a heat of fusion as determined by DSC of from 1 J/g to 50 J/g and stereoregular propylene crystallinity;

and a second component comprising a propylene polymer.

The invention also provides a process to produce the nonwoven fabric of any of claims 1 to 15, the process comprising:

a) blending a first component comprising from 5% to 99% by weight based on the total weight of the composition of a polymer selected from the group consisting of homopolymers of propylene and random copolymers of propylene, the polymer having a heat of fusion as determined by DSC of less than 50 J/g and stereoregular propylene crystallinity; and a second component comprising from 95% to 1% by weight based on the total weight of the composition of a propylene polymer or blends of propylene polymers; to form a blend composition;
b) extruding the blend composition to produce, finish, and wind a filament, then draw, finish, crimp, heat set and cut the filament into a staple fiber; and
c) forming the staple fiber into a non-woven fabric.

In another embodiment, the invention relates to nonwoven fabric made from an isotactic propylene polymer composition, the isotactic propylene polymer composition having a heat of fusion as determined by DSC of from 5 J/g to 45 J/g.

In yet another embodiment, the invention generally relates to a laminate produced by the process of thermobonding a plurality of layers comprising nonwoven fabrics comprising at least one layer of a melt blown fabric, a spunbond fabric, or a combination of a melt blown fabric and a spunbond fabric, the at least one layer made from a composition comprising: a first component comprising a polymer selected from the group consisting of homopolymers of propylene and random copolymers of propylene, wherein the polymer has a heat of fusion as determined by DSC of less than 50 J/g and stereoregular propylene crystallinity; and a second component comprising a propylene polymer.

In any of the embodiments described in this section, the permanent set of the at least one layer or the nonwoven fabric may be less than 60%.

In any of the embodiments described in this section, the permanent set of the at least one layer or the nonwoven fabric may be of from less than 30%.

In any of the embodiments described in this section, the permanent set of the at least one layer or the nonwoven fabric may be of from less than 15%.

In any of the embodiments described in this section, the at least one layer or the nonwoven fabric may have an elongation of from greater than 80%.

In any of the embodiments described in this section, the at least one layer or the nonwoven fabric may have an elongation of from greater than 150%.

In any of the embodiments described in this section, the at least one layer or the nonwoven fabric may have an elongation of from greater than 300%.

In any of the embodiments described in this section, the at least one layer or the nonwoven fabric may demonstrate anisotropic elongation.

In any of the embodiments described in this section, the first component is present in the composition or blend in an amount of from 5 to 99 wt% and the second component is present in an amount of from 95 to 1 wt%, based on the total weight of the composition or blend.

In any of the embodiments described in this section, the first component is present in the composition or blend in an amount of from 50 to 99 wt% and the second component is present in an amount of from 50 to 1 wt%, based on the total weight of the composition or blend.

In any of the embodiments described in this section, the first component is present in the composition or blend in an amount of from 80 to 99 wt% and the second component is present in an amount of from 20 to 1 wt%, based on the total weight of the composition or blend.

In any of the embodiments described in this section, the first component is present in the composition or blend in an amount of from 90 to 99 wt% and the second component is present in an amount of from 10 to 1 wt%, based on the total weight of the composition or blend.

## BRIEF DESCRIPTION OF THE DRAWINGS

Figure 1 shows a comparison of elongation of melt blown fabrics.

Figure 2 shows a comparison of melt blown fabric strengths.

Figure 3 shows elongation properties of inventive compositions.

Figure 4 shows fiber spinning speeds of various inventive blends compared to fiber spinning speeds of conventional polypropylene.

Figure 5 shows the elasticity of inventive examples.

Figure 6 shows the softness of inventive blends as compared to conventional polypropylene.

Figure 7 shows the draw force applicable to spunbond fibers prepared with chain scissioned polymer.

Figure 8 shows the fiber diameter of spunbond fibers prepared with chain scissioned polymer.

Figure 9 shows elongational characteristics of spunbond fibers prepared with chain scissioned polymer.

DETAILED DESCRIPTION

Various specific embodiments, versions and examples of the invention will now be described, including exemplary embodiments and definitions that are adopted herein for purposes of understanding the claimed invention. However, for purposes of determining infringement, the scope of the "invention" will refer to the appended claims, including their equivalents, and elements or limitations that are equivalent to those that are recited. Any reference to the "invention" may refer to one or more, but not necessarily all, of the inventions defined by the claims. References to specific "embodiments" are intended to correspond to claims covering those embodiments, but not necessarily to claims that cover more than those embodiments.

As used herein, the numbering scheme for the Periodic Table Groups are used as in HAWLEY'S CONDENSED CHEMICAL DICTIONARY 852 (13th ed. 1997).

As used herein, nonwoven fabric refers to any material made from the aggregation of fibers fabricated by methods such as, for example, spunbonding, melt blowing, thermobonding, or combinations thereof.

As used herein, the terms "multilayer laminate", "laminate", and "composite" refer to a layered structure wherein some of the layers may be spunbond fabric and some may be meltblown fabric such as, for example, spunbond/meltblown/spunbond ("SMS") laminate and others disclosed in, or other substrates such as films, netting, or other synthetic or natural material such as disclosed in, for example, U.S. Patent Nos. 4,041,203; 5,169,706; 5,145,727; 5,178,931 and 5,188,885. Such laminates or composites may also contain multiple layers of spunbond and meltblown fabrics in various combinations such as SMS, SSMMSS, etc. The laminates and composites of the present invention may comprise layers of the same or different materials. Each layer may also comprise a material or a combination of materials. Each layer may also comprise sub-layers.

As used herein, anisotropic behavior refers to fabrics having different properties in different directions. For example, a fabric demonstrating anistropic elongation would have an elongation in the machine direction (MD) different from its elongation measured in the cross direction (CD). The same fabric may also be characterized as having an asymmetric stretch. In this example, the anisotropic behavior typically has elongation in the machine direction (MD) substantially less than the elongation in the transverse direction (TD). The term substantially, in this context, means less than 90%, alternatively less than 80%, or less than 75%.

As used herein, the term "polypropylene", "propylene polymer," or "PP" refers to homopolymers, copolymers, terpolymers, and interpolymers, made from propylene derived units, and $C_2$ to $C_{12}$ $\alpha$-olefin derived units.

As used herein, the term "reactor grade" refers to polyolefin resin whose molecular weight distribution (MWD), or polydispersity, has not been substantially altered after polymerization. The term particularly includes polyolefins which, after polymerization, have not been treated, or subjected to treatment, to substantially reduce viscosity or substantially reduce average molecular weight.

As used herein, "isotactic" is defined as having at least 40% isotactic pentads of methyl groups derived from propylene according to analysis by $^{13}$C-NMR.

As used herein, molecular weight (Mn and Mw) and molecular weight distribution (MWD) refer to the methods disclosed in U.S. Patent 4,540,753 and references cited therein and in Macromolecules, 1988, volume 21, p 3360 and references cited therein.

Differential Scanning Calorimetry (DSC) is described as follows: 6 to 10 mg of a sheet of the polymer pressed at approximately 200°C to 230°C is removed with a punch die or part of a polymer pellet. The sample is placed in a Differential Scanning Calorimeter (Perkin Elmer 7 Series Thermal Analysis System) and cooled to -50°C to -70°C. The sample is heated at 10°C/min to attain a final temperature of 200°C to 220°C. The thermal output during this heating is recorded. The melting peak of the sample is typically peaked at 30°C to 175°C and occurs between the temperatures of 0°C and 200°C. The area under the thermal output curve, measured in Joules, is a measure of the heat of fusion. The melting point is recorded as the temperature of the greatest heat absorption within the range of melting of the sample.

As used herein, the softness of a nonwoven fabric may be measured according to the "Handle-O-Meter" test as specified in operating manual on Handle-O-Meter model number 211-5 from the Thwing-Albert Instrument Co., 10960 Dutton Road, Phila., Pa., 19154. The Handle-O-Meter reading is in units of grams. The modification s are: 1. Two specimens per sample were used and 2. Readings are kept below 100 gram by adjusting the slot width used and the same slot width is used through out the whole series of samples being compared. In the examples, all samples were test with a slot width of 10 mm.

As used herein, the tensile strength and elongation of a fabric may be measured according to the ASTM test D-5035 with four modifications: 1) the jaw width is 5 in instead of 3 in, 2) test speed is 5 in/min instead of 12 in/min, 3) metallic arc-type upper line grip and a flat lower rubber grip instead of a flat metallic upper and a flat metallic of other lower grip, and 6 MD and 6 CD measurements instead of 5 MD and 8 CD measurements are made for each specimen. This test measures the strength in pounds and elongation in percent of a fabric.

As used herein, permanent set can be measured according to the following procedure. The deformable zone (1" wide strip) of the fabric sample is prestretched to 100% of its original length at a deformation rate of 20 in/min in an INSTRON testing machine. The sample is then relaxed at the same rate. The strain at which no further change in stress is observed is taken to be the permanent set. An alternative way to measure permanent set is to measure the length of the sample that is deformed ($D_2$). The length of the deformation zone in the specimen prior to deformation is measured as $D_0$. The permanent set of the sample is determined by the formula: permanent set = $100x(D_2-D_0)/D_0$. The permanent set being a ratio of extension and contraction is generally relatively constant for these fabrics regardless of the axis along which the fabric is stretched. In the event of any variation the values in the claim refer to such permanent set if it is obtainable in at least one direction of extension.

The melt flow rate (MFR) is a measure of the viscosity of a polymer. The MFR is expressed as the weight of material which flows from a capillary of known dimensions under a specified load or shear rate for a measured period of time and is measured in grams/10 minutes at 230°C according to, for example, ASTM test 1238-01, Condition B.

As used herein, "metallocene" means one or more compounds represented by the formula $Cp_mMR_nX_q$, wherein Cp is a cyclopentadienyl ring which may be substituted, or derivative thereof which may be substituted; M is a Group 4, 5, or 6 transition metal, for example titanium, zirconium, hafnium, vanadium, niobium, tantalum, chromium, molybdenum and tungsten; R is a hydrocarbyl group or hydrocarboxy group having from one to 20 carbon atoms; X may be a halide, a hydride, an alkyl group, an alkenyl group or an arylalkyl group; and m=1-3; n=0-3; q=0-3; and the sum of m+n+q is equal to the oxidation state of the transition metal.

Abbreviations may be used including: Me = methyl, Et = ethyl, Bu = butyl, Ph = phenyl, Cp = cyclopentadienyl, Cp* = pentamethyl cyclopentadienyl, Ind = indenyl, Ti = titanium, Hf = hafnium, Zr = zirconium, O = oxygen, Si = silicon B = boron, Ta = tantalum, Nb = niobium, Ge = germanium, Mg = magnesium, Al = aluminum, Fe = iron, Th = thorium, Ga = gallium, P = phosphorus, Mo = molybdenum, Re = rhenium, and Sn = tin.

As used herein, "support" or "support composition" refers to compounds that are particulate and porous that may optionally be calcinated or contacted with a halogen. For example, a fluorided support composition can be a silicon dioxide support wherein a portion of the silica hydroxyl groups has been replaced with fluorine or fluorine containing compounds. Suitable fluorine containing compounds include, but are not limited to, inorganic fluorine containing compounds and/or organic fluorine containing compounds.

As used herein, "metallocene catalyst system" is the product of contacting components: (1) one or more metallocenes; (2) one or more activators; and (3) optionally, one or more support compositions.

Fiber and Fabric Formation

The formation of nonwoven fabrics from polyolefins and their blends generally requires the manufacture of fibers by extrusion followed by weaving or bonding. The extrusion process is typically accompanied by mechanical or aerodynamic drawing of the fibers. The elastic fabric of the present invention may be manufactured by any technique known in the art. Such methods and equipment are well known. For example, spunbond nonwoven fabrics may be produced by spunbond nonwoven production lines produced by Reifenhauser GmbH & Co., of Troisdorf, Germany. The Reifenhasuer system utilizes a slot drawing technique as revealed in U.S. Patent No. 4,820,142. Fabrics of the present invention demonstrate desirable elongation, and in certain embodiments, enhanced softness. Specific embodiments are described as follows.

Conventional Fine Denier Fibers

The three more conventional fiber operations, continuous filament, bulked continuous filament, and staple, are contemplated as application for the elastic fibers of the present invention. For example, the polymer melt is extruded through the holes in the die (spinneret) between, 0.3 mm to 0.8 mm in diameter. Low melt viscosity of the polymer is important and is achieved through the use of high melt temperature (230°C to 280°C) and high melt flow rates (15 g/10

min to 40 g/10 min) of the polymers used. A relatively large extruder is usually equipped with a manifold to distribute a high output of molten PP to a bank of eight to twenty spinnerets. Each spinhead is usually equipped with a separate gear pump to regulate output through that spinhead; a filter pack, supported by a "breaker plate;" and the spinneret plate within the head. The number of holes in the spinneret plate determines the number of filaments in a yarn and varies considerably with the different yarn constructions, but it is typically in the range of 50 to 250. The holes are typically grouped into round, annular, or rectangular patterns to assist in good distribution of the quench air flow.

Continuous Filament

Continuous filament yarns typically range from 40 denier to 2,000 denier (denier = number of grams/9000 yd). Filaments can range from 1 to 20 denier per filament (dpf), and the range is growing. Spinning speeds are typically 800 m/min to 1500 m/min (2500 ft/min to 5000 ft/min). An exemplary method would proceed as follows. The filaments are drawn at draw ratios of 3:1 or more (one- or two-stage draw) and wound onto a package. Two-stage drawing allows higher draw ratios to be achieved. Winding speeds are 2,000 m/min to 3,500 m/min (6,600 ft/min to 11,500 ft/min). Spinning speeds in excess of 900 m/min (3000 ft/min) require a narrow MWD to get the best spinnability with the finer filaments. Resins with a minimum MFR of 5 and a NMWD, with a polydispersity index (PI) under 2.8 are typical. In slower spinning processes, or in heavier denier filaments, a 16-MFR reactor grade product may be more appropriate.

Partially Oriented Yarn (POY)

Partially oriented yarn (POY) is the fiber produced directly from fiber spinning without solid state drawing (as continuous filament mentioned above). The orientation of the molecules in the fiber is done only in the melt state just after the molten polymer leaves the spinnerett. Once the fiber is solidified, no drawing of the fiber takes place and the fiber is wounded up into a package. The POY yarn (as opposed to fully oriented yarn, or FOY, which has gone through solid state orientation and has a higher tensile strength and lower elongation) tends to have a higher elongation and lower tenacity.

Bulked Continuous Filament

Bulked Continuous Filament fabrication processes fall into two basic types, one-step and two steps. For example, in a two-step process, an undrawn yarn is spun at less than 1,000 m/min (3,300 ft/min), usually 750 m/min, and placed on a package. The yarn is drawn (usually in two stages) and "bulked" on a machine called a texturizer. Winding and drawing speeds are limited by the bulking or texturizing device to 2,500 m/min (8,200 ft/min) or less. As in the two-step CF process, secondary crystallization requires prompt draw texturizing. The most common process today is the one-step spin/draw/text (SDT) process. This process provides better economics, efficiency and quality than the two-step process. It is similar to the one-step CF process, except that the bulking device is in-line. Bulk or texture changes yarn appearance, separating filaments and adding enough gentle bends and folds to make the yarn appear fatter (bulkier).

Staple Fiber

There are two basic staple fiber fabrication processes: traditional and compact spinning. The traditional process typically involves two steps: 1) producing, applying finish, and winding followed by 2) drawing, a secondary finish application, crimping, and cutting into staple. Filaments can range, for example, from 1.5 dpf to > 70 dpf, depending on the application. Staple length can be as short as 7 mm or as long as 200 mm (0.25 in. to 8 in.) to suit the application. For many applications the fibers are crimped. Crimping is accomplished by over-feeding the tow into a steam-heated stuffer box with a pair of nip rolls. The over-feed folds the tow in the box, forming bends or crimps in the filaments. These bends are heat-set by steam injected into the box. The MW, MWD, and isotactic content of the resin all affect crimp stability, amplitude, and ease of crimping.

Melt Blown Fabrics

Melt blown fabrics generally refer to webs of fine filaments having fiber diameter in the range of 20 to 0.1 microns. Typical fiber diameters are in the range of 1 to 10 microns and more typically in 1 to 5 microns: The nonwoven webs formed by these fine fiber diameters have very small pore sizes and therefore have excellent barrier properties. For example, in the melt blown process, the extruder melts the polymer and delivers it to a metering melt pump. The melt pump delivers the molten polymer at a steady output rate to the special melt blowing die. As the molten polymer exits the die, they are contacted by high temperature, high velocity air (called process or primary air). This air rapidly draws and, in combination with the quench air, solidifies the filaments. The entire fiber forming process typically takes

place within several inches of the die. Die design is the key to producing a quality product efficiently. The fabric is formed by blowing the filaments directly onto a porous forming belt, typically 200 mm to 400 mm (8 in. to 15 in.) from the spinnerets. A larger forming distance may be used for heavier basis weight, higher loft product. Melt blowing requires very high melt flow rate resin typically >200 g/ 10 min, to obtain the finest possible fibers, although resin MFR as low as 20 g/10 min can be used at a higher processing temperature in other embodiments.

Spunbonded Fabric

Spunbond or spunbonded fibers generally refer to fibers produced , for example, by the extrusion of molten polymer from either a large spinneret having several thousand holes or with banks of smaller spinnerets, for example, containing as few as 40 holes. After exiting the spinneret, the molten fibers are quenched by a cross-flow air quench system, then pulled away from the spinneret and attenuated (drawn) by high speed air. There are generally two methods of air attenuation, both of which use the venturi effect. The first draws the filament using an aspirator slot (slot draw), which runs the width of the spinneret or the width of the machine. The second method draws the filaments through a nozzle or aspirator gun. Filaments formed in this manner are collected on a screen ("wire") or porous forming belt to form the web. The web is then passed through compression rolls and then between heated calender rolls where the raised lands on one roll bond the web at points covering 10% to 40% of its area to form a nonwoven fabric.

Inventive fabrics having desired elongation and elasticity may be obtained by varying the blend compositions, adding an additional annealing step, or a combination of the aforementioned.

Annealing may be done after the formation of fiber in continuous filament or fabrication of a non-woven material from the fibers. Annealing partially relieves the internal stress in the stretched fiber and restores the elastic recovery properties of the blend in the fiber. Annealing has been shown to lead to significant changes in the internal organization of the crystalline structure and the relative ordering of the amorphous and semicrystalline phases. This leads to recovery of the elastic properties. For example, annealing the fiber at a temperature of at least 40°C, above room temperature (but slightly below the crystalline melting point of the blend) is adequate for the restoration of the elastic properties in the fiber.

Thermal annealing of the polymer blend is conducted by maintaining the polymer blends or the articles made from a such a blend at temperature, for example, between room temperature to a maximum of 160°C or alternatively to a maximum of 130°C for a period between a few seconds to less than 1 hour. A typical annealing period is 1 to 5 min. at 100°C. The annealing time and temperature can be adjusted for any particular blend. In other embodiments, the annealing temperature ranges from 60°C to 130°C. In another embodiment, the temperature is about 100°C. In certain embodiments, for example, conventional continuous fiber spinning, annealing can be done by passing the fiber through a heated roll (godet), without the application of conventional annealing techniques. Annealing should be under the very low fiber tension to allow shrinking of the fiber in order to impart elasticity to the fiber. In nonwoven processes, the web usually passes through a calender to point bond (consolidate) the web. The passage of the unconsolidated nonwoven web through a heated calender at relatively high temperature is sufficient to anneal the fiber and increase the elasticity of the nonwoven web. Similar to fiber annealing, the nonwoven web should be under low tension to allow for shrinkage of the web in both machine direction (MD) and cross direction (CD) to enhance the elasticity of the nonwoven web. In other embodiments, the bonding calender roll temperature ranges from 100°C to 130°C. In another embodiment, the temperature is about 100°C. The annealing temperature can be adjusted for any particular blend.

In other embodiments, the elastic nonwoven fabrics of the present invention require little to no post fabrication processing. In another embodiment, the elastic fabrics of the present invention are annealed in a single-step by a heated roll (godet) during calendering under low tension. Depending on the end use application, it is apparent what techniques are appropriate and what variations in process parameters are required to obtain the desired fabric properties. For example, the following table is provided for illustration.

**Table 1**

| **Composition variable** | | **Process variable** | | | | | **Result** | | |
|---|---|---|---|---|---|---|---|---|---|
| FPC | SPC | Annealing Calender Temp | Process Temp. | Line Speed | Take up Tension | | MD Elasticity | TD elasticity | Permanent Set |
| higher | lower | same | same | same | same | | high | high | low |
| lower | higher | same | same | same | same | | low | low | high |
| same | same | higher | same | same | same | | high | high | low |

(continued)

| Composition variable | | Process variable | | | | | Result | | |
|---|---|---|---|---|---|---|---|---|---|
| FPC | SPC | Annealing Calender Temp | Process Temp. | Line Speed | Take up Tension | | MD Elasticity | TD elasticity | Permanent Set |
| same | same | lower | same | same | same | | low | low | high |
| same | same | same | higher | Same | same | | weak effect | weak effect | weak effect |
| same | same | same | lower | same | same | | weak | weak | weak |
| same | same | same | same | higher | --- | | low | high | small effect |
| same | same | same | same | lower | same | | high | low | small effect |
| same | same | same | same | same | higher | | low | high | small effect |
| same | same | same | same | same | lower | | high | lower | small effect |

For example, elongation or extensitivity is a key attribute for many applications. As stated above, the tensile strength and elongation of a fabric may be measured according to the ASTM test D-5035 with four modifications: 1) the jaw width is 5 in instead of 3 in, 2) test speed is 5 in/min instead of 12 in/min, 3) metallic arc-type upper line grip and a flat lower rubber grip instead of a flat metallic upper and a flat metallic of other lower grip, and 6 MD and 6 TD measurements instead of 5 MD and 8 TD measurements are made for each specimen. It can be measured as "peak elongation" or "break elongation". Peak elongation is percent increase in length of the specimen when the stress of the specimen is at its maximum. Break elongation is percent increase in length of the specimen when the specimen breaks. The elongation can be measured in the machine direction (MD) of the fabric or the cross direction (CD) of the fabric. The MD elongation is normally lower than the CD due to machine direction orientation of the fibers.

For example, in Figure 1, melt blown fabrics were made from two inventive materials. The fabrics were made at different output rates (from 0.2 to 0.6 gram/hole/min) having a basis weight of 80-90 gram/$m^2$. Sample A and Sample B produced at different output rates show a much higher elongation than conventional polypropylene resin PP3155. Sample A is a blend of 60% FPC and 40% SPC and Sample B a blend of 80% FPC and 20% SPC, where FPC is a copolymer of propylene and ethylene containing 15% ethylene with a 20 MFR. SPC in both samples is PP3155, a 36 MFR polypropylene homopolymer manufactured by ExxonMobil Chemical Company, Baytown, TX.. The samples were produced on a 500mm wide melt blown line produced by Reifenhauser GmbH & Co.

Figure 2 compares the tensile strength of the same fabric as shown in Figure 1. The tensile strength of the fabric is measured in Ib force using ASTM test D-5035 procedure with modifications mentioned above. The tensile strength of the inventive material is substantially lower than the conventional melt blown fabric. This indicated that the inventive materials have a lower resistance to elongation which is a desirable feature for most consumer products.

Additionally, in Figure 3, the same is demonstrated for Spunbond fabric. Sample A is a blend of 80% FPC and 20% SPC. Sample B is a blend of 90% FPC and 10% SPC. The FPC is a copolymer of propylene and ethylene containing 15% ethylene, 20 MFR. The SPC is PP3155, a 36 MFR polypropylene homopolymer manufactured by ExxonMobil Chemical Company. The elongation of a conventional polypropylene homopolymer (such as PP3155 from ExxonMobil Chemical Company) fabric is in the range of 50-80%. The inventive samples have a much higher elongation. Thus, they are more stretchable. In particular, fabric made from Sample A has an elongation from 150 to 180 %. Fabric made from Sample B has an elongation from 200 to 300 %.

The elastic fabrics of the present invention demonstrate elongation from greater than 80%, alternatively from greater than 90%, alternatively from greater than 100%, alternatively from greater than 200%, alternatively from greater than 300%, alternatively from greater than 400%, and alternatively from greater than 500%.

Another important aspect of elastic fabrics for certain applications is permanent set. Permanent set relates to the stress and the strain that may be applied to a fabric before it fails. (See above.)

Figure 5 demonstrates the elasticity of the sample. In particular, Figure 5 represents the stress-strain of fabrics made from a blend of 90% FPC and 10% SPC, where the FPC is a copolymer of propylene and ethylene containing 15% ethylene, 20 MFR and the SPC is PP3155, a 36 MFR polypropylene homopolymer manufactured by ExxonMobil Chemical Company. The fabrics were stretched to 100% and then allowed to retract until the stress was reduced to zero to measure the permanent set of the fabric as a result of stretching. The permanent set of the sample is approximately 15% in MD and CD. Under the same test, fabric from conventional PP homopolymer would break at approximately

50-80% elongation.

The elastic fabrics of the present invention demonstrate permanent set from less than 60%, alternatively from less than 50%, alternatively from less than 40%, alternatively from less than 30%, alternatively from less than 20%, alternatively from less than 15 %, alternatively from less than 10%, alternatively from less than 5%, and alternatively from less than 1%.

Another important consideration for fabrics for certain applications is the ability of a fiber to spin at certain speeds. Figure 4 shows inventive blends compared with two control samples Achieve™ 3854 (24 MFR propylene homopolymer produced by ExxonMobil Chemical Company using a metallocene catalyst system) and PP3155 (36 MFR propylene homopolymer produced by ExxonMobil Chemical Company using a Ziegler-Natta catalyst system) in terms of spinnability. Both Achieve™ 3854 and PP3155 are used widely in the industry for spunbond applications. The formulations are as follows:

**Table 1a**

| Sample No. | % FPC* | % SPC | SPC composition |
|---|---|---|---|
| 1 | 80 | 20 | Achieve™ 3854 |
| 2 | 70 | 30 | Achieve™ 3854 |
| 3 | 60 | 40 | Achieve™ 3854 |
| 4 | 50 | 50 | Achieve™ 3854 |
| 5 | 30 | 70 | Achieve™ 3854 |
| 6 | 50 | 50 | PP3155 |
| 7 | 70 | 30 | PP3155 |
| * FPC (first polymer component) in all samples are copolymer of propylene and ethylene containing 12% ethylene, 15 MFR. | | | |

The spinnability test is conducted by spinning the fiber in a conventional fiber spinning line under POY (partially oriented yarn) mode. The output per capillary is fixed at 0.6 gram/hole/min and the take up speed of the fiber is increased until the fiber break occurs. The higher the speed when the fiber break occurs, the better the fiber spinnability. The graphs demonstrate that the inventive blends have the ability to produce fibers that spin at competent levels as that of conventional fiber grade resins.

Softness

The inventive materials produce fabrics that are substantially softer as compared to conventional nonwoven fabrics. As shown in Figure 6, the inventive fabrics are softer than the conventional material in all levels. In certain embodiments, the amount of the First Polymer Component (FPC) (as defined below) present in the inventive blends is increased to produce softer and/or more elastic fabrics.

The softness of a nonwoven fabric may be measured according to the "Handle-O-Meter" test as specified in operating manual on Handle-O-Meter model number 211-5 from the Thwing-Albert Instrument Co., 10960 Dutton Road, Phila., Pa., 19154. The Handle-O-Meter reading is in units of grams. The modification s are: 1. Two specimens per sample were used and 2. Readings are kept below 100 gram by adjusting the slot width used and the same slot width is used through out the whole series of samples being compared.

For example, blends with FPC content greater than 50 wt% (based upon the weight of the blend) show good softness. In certain embodiments, a nonwoven fabric is made from a composition comprising: a first component comprising from 50% to 99%, alternatively, 50% to 100%, by weight based on the total weight of the composition of a polymer selected from the group consisting of homopolymers of propylene and random copolymers of propylene, the polymer having a heat of fusion as determined by DSC of less than 50 J/g and stereoregular propylene crystallinity; and a second component comprising from 50% to 1%, alternatively, 50% to 0%, by weight based on the total weight of the composition of a propylene polymer or blends of propylene polymers; wherein the nonwoven fabric has a permanent set of from less than 60%, alternatively, from less than 30%, and alternatively, from less than 15%.

Figure 6 compares the softness of inventive and comparison fabrics using Handle-O-Meter (Model number 211-5 from the Thwing-Albert Instrument Co.). In Figure 6, "FPC" is a copolymer of propylene and ethylene containing 15% ethylene, 20 MFR. "SPC" is PP3155. It is a blend component for the inventive examples and also used for a comparative example. "PP3155" is a 36 MFR polypropylene homopolymer manufactured by ExxonMobil Chemical

Company, Baytown, TX. Sample A is 90 wt% FPC and 10 wt% SPC, based upon the total weight of the blend. Sample B is 80 wt% FPC and 20 wt% SPC, based upon the total weight of the blend. Fabric basis weight for PP3155 is 37 grams/m2 and the two inventive materials are 68 and 73 gsm (grams/m2), respectively.

The softness of the spunbond fabric is shown in figure 6. The fabric was produced on a 1 meter width spunbond line manufactured by Reifenhauser GmbH & Co. The fabrics were tested on Handle-O-Meter model number 211-5 from the Thwing-Albert Instrument Co. The slot width was set at 10 mm and specimen size was 8 inch by 8 inch square. The force reading from the test is in grams.

The inventive fabrics (Sample A and Sample B) have a lower energy reading (softer) than the conventional polypropylene spunbond fabric (made from sample PP3155), even though the inventive fabric is much heavier than the control sample.

In certain embodiments, the inventive fabrics have Handle-O-Meter values of from less than 25 g, tested under the slot width of 10 mm, specimen size of 8 in by 8 inch, at 70 gsm (fabric base weight), alternatively, of from less than 20 g, tested under the slot width of 10 mm, specimen size of 8 in by 8 inch, at 70 gsm (fabric base weight), alternatively, of from less than 15 g, tested under the slot width of 10 mm, specimen size of 8 in by 8 inch, at 70 gsm (fabric base weight), alternatively, of from less than 10 g, tested under the slot width of 10 mm, specimen size of 8 in by 8 inch, at 70 gsm (fabric base weight), and, alternatively, of from less than 5 g, tested under the slot width of 10 mm, specimen size of 8 in by 8 inch, at 70 gsm (fabric base weight).

Polymeric Compositions

In an embodiment, the elastic nonwoven fabrics of the invention are comprised of an alpha-olefin copolymer. In another embodiment, the elastic fibers and elastic nonwoven fabrics of the invention are comprised of a blend of a crystalline isotactic polypropylene polymer component and an alpha-olefin copolymer component. In certain embodiments, a blend of two components is not required so long as the propylene polymer compositions have the requisite properties, for example, the isotactic propylene polymer composition having a heat of fusion as determined by DSC of from 5 J/g to 45 J/g, to produce fabrics in accordance with the invention described herein. Other embodiments of the invention may also include additional components such as additives, process aids, plasticizers, etc.

First Polymer Component (FPC)

In an embodiment, the first polymer component ("FPC") is an elastic polymer with a moderate level of crystallinity due to stereoregular propylene sequences. The FPC may comprise: (A) a propylene homopolymer in which the stereoregularity is disrupted in some manner such as by regio-inversions; (B) a random propylene copolymer in which the propylene stereoregularity is disrupted at least in part by comonomers or (C) a combination of (A) and (B).

In another embodiment, the FPC further comprises a non-conjugated diene monomer to aid in vulcanization and other chemical modification of the blend composition. The amount of diene present in the polymer is preferably less than 10% by weight, and more preferably less than 5% by weight. The diene may be any non-conjugated diene which is commonly used for the vulcanization of ethylene propylene rubbers including, but not limited to, ethylidene norbornene, vinyl norbornene, and dicyclopentadiene.

The FPC is a random copolymer of propylene and at least one comonomer selected from ethylene, $C_4$-$C_{12}$ $\alpha$-olefins, and combinations thereof. In a particular aspect of this embodiment, the copolymer includes ethylene-derived units in an amount ranging from a lower limit of 10% by weight to an upper limit of 20%, 25%, or 28% by weight. This embodiment may also include propylene-derived units present in the copolymer in an amount ranging from a lower limit of 72%, 75%, or 80% by weight to an upper limit of 90% by weight. These percentages by weight are based on the total weight of the propylene and ethylene-derived units; i.e., based on the sum of weight percent propylene-derived units and weight percent ethylene-derived units being 100%.

The ethylene composition of a polymer can be measured as follows. A thin homogeneous film is pressed at a temperature of about 150°C or greater, then mounted on a Perkin Elmer PE 1760 infrared spectrophotometer. A full spectrum of the sample from 600 $cm^{-1}$ to 4000 $cm^{-1}$ is recorded and the monomer weight percent of ethylene can be calculated according to the following equation: Ethylene wt % = 82.585 -111.987X + 30.045 $X^2$, wherein X is the ratio of the peak height at 1155 $cm^{-1}$ and peak height at either 722 $cm^{-1}$ or 732 $cm^{-1}$, whichever is higher. The concentrations of other monomers in the polymer can also be measured using this method.

Comonomer content of discrete molecular weight ranges can be measured by Fourier Transform Infrared Spectroscopy (FTIR) in conjunction with samples collected by GPC. One such method is described in Wheeler and Willis, Applied Spectroscopy, 1993, vol. 47, pp. 1128-1130. Different but similar methods are equally functional for this purpose and well known to those skilled in the art.

Comonomer content and sequence distribution of the polymers can be measured by $^{13}$C nuclear magnetic resonance ($^{13}$C NMR), and such method is well known to those skilled in the art.

In one embodiment, the FPC comprises a random propylene copolymer having a narrow compositional distribution. In another embodiment, the polymer is a random propylene copolymer having a narrow compositional distribution and a melting point as determined by DSC of from 25°C to 110°C. The copolymer is described as random because for a polymer comprising propylene, comonomer, and optionally diene, the number and distribution of comonomer residues is consistent with the random statistical polymerization of the monomers. In stereoblock structures, the number of block monomer residues of any one kind adjacent to one another is greater than predicted from a statistical distribution in random copolymers with a similar composition. Historical ethylene-propylene copolymers with stereoblock structure have a distribution of ethylene residues consistent with these blocky structures rather than a random statistical distribution of the monomer residues in the polymer. The intramolecular composition distribution (i.e., randomness) of the copolymer may be determined by $^{13}$C NMR, which locates the comonomer residues in relation to the neighboring propylene residues. The intermolecular composition distribution of the copolymer is determined by thermal fractionation in a solvent. A typical solvent is a saturated hydrocarbon such as hexane or heptane. The thermal fractionation procedure is described below. Typically, approximately 75% by weight, preferably 85% by weight, of the copolymer is isolated as one or two adjacent, soluble fractions with the balance of the copolymer in immediately preceding or succeeding fractions. Each of these fractions has a composition (wt% comonomer such as ethylene or other $\alpha$-olefin) with a difference of no greater than 20% (relative), preferably 10% (relative), of the average weight % comonomer of the copolymer. The copolymer has a narrow compositional distribution if it meets the fractionation test described above. To produce a copolymer having the desired randomness and narrow composition, it is beneficial if (1) a single sited metallocene catalyst is used which allows only a single statistical mode of addition of the first and second monomer sequences and (2) the copolymer is well-mixed in a continuous flow stirred tank polymerization reactor which allows only a single polymerization environment for substantially all of the polymer chains of the copolymer.

The crystallinity of the polymers may be expressed in terms of heat of fusion. Embodiments of the present invention include polymers having a heat of fusion, as determined by DSC, ranging from a lower limit of 1.0 J/g, or 3.0 J/g, to an upper limit of 50 J/g, or 10 J/g. Without wishing to be bound by theory, it is believed that the polymers of embodiments of the present invention have generally isotactic crystallizable propylene sequences, and the above heats of fusion are believed to be due to the melting of these crystalline segments.

The crystallinity of the polymer may also be expressed in terms of crystallinity percent. The thermal energy for the highest order of polypropylene is estimated at 189 J/g. That is, 100% crystallinity is equal to 189 J/g. Therefore, according to the aforementioned heats of fusion, the polymer has a polypropylene crystallinity within the range having an upper limit of 65%, 40%, 30%, 25%, or 20%, and a lower limit of 1%, 3%, 5%, 7%, or 8%.

The level of crystallinity is also reflected in the melting point. The term "melting point," as used herein, is the highest peak among principal and secondary melting peaks as determined by DSC, discussed above. In one embodiment of the present invention, the polymer has a single melting point. Typically, a sample of propylene copolymer will show secondary melting peaks adjacent to the principal peak, which are considered together as a single melting point. The highest of these peaks is considered the melting point. The polymer preferably has a melting point by DSC ranging from an upper limit of 110°C, 105°C, 90°C, 80°C, or 70°C, to a lower limit of 0°C, 20°C, 25°C, 30°C, 35°C, 40°C, or 45°C. Typically, a sample of the alpha-olefin copolymer component will show secondary melting peaks adjacent to principal peak; these are considered together as single melting point. The highest of the peaks is considered the melting point.

The FPC may have a weight average molecular weight (Mw) within the range having an upper limit of 5,000,000 g/mol, 1,000,000 g/mol, or 500,000 g/mol, and a lower limit of 10,000 g/mol, 20,000 g/mol, or 80,000 g/mol, and a molecular weight distribution Mw/Mn (MWD), sometimes referred to as a "polydispersity index" (PDI), ranging from a lower limit of 1.5, 1.8, or 2.0 to an upper limit of 40, 20, 10, 5, or 4.5. The Mw and MWD, as used herein, can be determined by a variety of methods, including those in U.S. Patent No. 4,540,753 to Cozewith, et al., and references cited therein, or those methods found in Verstrate et al., Macromolecules, v. 21, p. 3360 (1988), the descriptions of which are incorporated by reference herein for purposes of U.S. practices.

In one embodiment, the FPC has a Mooney viscosity, ML(1+4) @ 125°C, of 100 or less, 75 or less, 60 or less, or 30 or less. Mooney viscosity, as used herein, can be measured as ML(1+4) @ 125°C according to ASTM D1646, unless otherwise specified.

The FPC used in embodiments of the present invention can have a tacticity index (m/r) ranging from a lower limit of 4 or 6 to an upper limit of 8, 10, or 12. The tacticity index, expressed herein as "m/r", is determined by $^{13}$C nuclear magnetic resonance (NMR). The tacticity index m/r is calculated as defined in H.N. Cheng, Macromolecules, 17, 1950 (1984). The designation "m" or "r" describes the stereochemistry of pairs of contiguous propylene groups, "m" referring to meso and "r" to racemic. An m/r ratio of 1.0 generally describes a syndiotactic polymer, and an m/r ratio of 2.0 an atactic material. An isotactic material theoretically may have a ratio approaching infinity, and many by-product atactic polymers have sufficient isotactic content to result in ratios of greater than 50.

In one embodiment, the FPC has isotactic stereoregular propylene crystallinity. The term "stereoregular" as used herein means that the predominant number, i.e. greater than 80%, of the propylene residues in the polypropylene or in the polypropylene continuous phase of a blend, such as impact copolymer exclusive of any other monomer such

as ethylene, has the same 1,2 insertion and the stereochemical orientation of the pendant methyl groups is the same, either meso or racemic.

An ancillary procedure for the description of the tacticity of the propylene units of embodiments of the current invention is the use of triad tacticity. The triad tacticity of a polymer is the relative tacticity of a sequence of three adjacent propylene units, a chain consisting of head to tail bonds, expressed as a binary combination of m and r sequences. It is usually expressed for copolymers of the present invention as the ratio of the number of units of the specified tacticity to all of the propylene triads in the copolymer.

The triad tacticity (mm fraction) of a propylene copolymer can be determined from a $^{13}C$ NMR spectrum of the propylene copolymer and the following formula:

$$\text{mm Fraction} = \frac{\text{PPP(mm)}}{\text{PPP(mm)} + \text{PPP(mr)} + \text{PPP(rr)}}$$

where PPP(mm), PPP(mr) and PPP(rr) denote peak areas derived from the methyl groups of the second units in the following three propylene unit chains consisting of head-to-tail bonds:

PPP(mm): 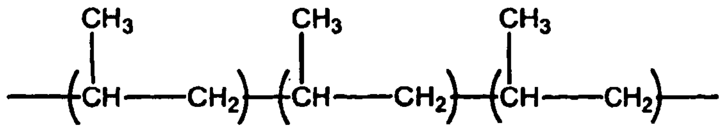

PPP(mr): 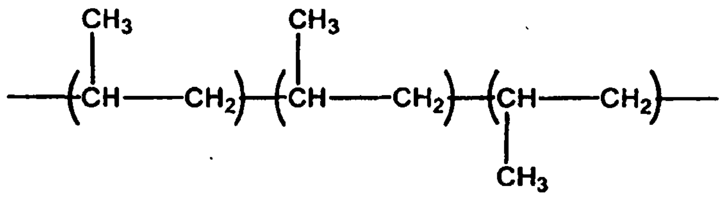

PPP(rr): 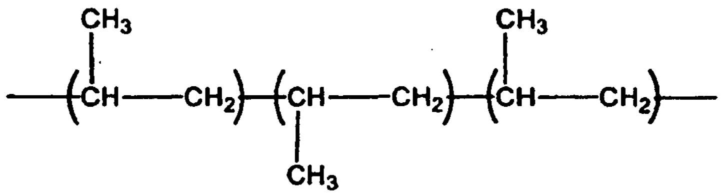

The $^{13}C$ NMR spectrum of the propylene copolymer is measured as described in U.S. Patent No. 5,504,172. The spectrum relating to the methyl carbon region (19-23 parts per million (ppm)) can be divided into a first region (21.2-21.9 ppm), a second region (20.3-21.0 ppm) and a third region (19.5-20.3 ppm). Each peak in the spectrum was assigned with reference to an article in the journal Polymer, Volume 30 (1989), page 1350. In the first region, the methyl group of the second unit in the three propylene unit chain represented by PPP (mm) resonates. In the second region, the methyl group of the second unit in the three propylene unit chain represented by PPP (mr) resonates, and the methyl group (PPE-methyl group) of a propylene unit whose adjacent units are a propylene unit and an ethylene unit resonates (in the vicinity of 20.7 ppm). In the third region, the methyl group of the second unit in the three propylene unit chain represented by PPP (rr) resonates, and the methyl group (EPE-methyl group) of a propylene unit whose adjacent units are ethylene units resonates (in the vicinity of 19.8 ppm).

The calculation of the triad tacticity is outlined in the techniques shown in U.S. Patent No. 5,504,172. Subtraction of the peak areas for the error in propylene insertions (both 2,1 and 1,3) from peak areas from the total peak areas of the second region and the third region, the peak areas based on the 3 propylene units-chains (PPP(mr) and PPP(rr)) consisting of head-to-tail bonds can be obtained. Thus, the peak areas of PPP(mm), PPP(mr) and PPP(rr) can be evaluated, and hence the triad tacticity of the propylene unit chain consisting of head-to-tail bonds can be determined.

The FPC may have a triad tacticity of three propylene units, as measured by $^{13}C$ NMR, of 75% or greater, 80% or greater, 82% or greater, 85% or greater, or 90% or greater.

In embodiments of the present invention, the FPC has a melt flow rate (MFR) of 5000 dg/min or less, alternatively, 300 dg/min or less, alternatively 200 dg/min or less, alternatively, 100 dg/min or less, alternatively, 50 dg/min or less,

alternatively, 20 dg/min or less, alternatively, 10 dg/min or less, or, alternatively, 2 dg/min or less. The determination of the MFR of the polymer is according to ASTM D1238 (230°C, 2.16kg).

In certain embodiments, the FPC of the present invention is present in the inventive blend compositions in an amount ranging from a lower limit of 50%, 70%, 75%, or 80%, or 82%, or 85% by weight based on the total weight of the composition, to an upper limit of 99%, 95%, or 90% by weight based on the total weight of the composition.

The FPC may be produced by any process that provides the desired polymer properties, in heterogeneous polymerization on a support, such as slurry or gas phase polymerization, or in homogeneous conditions in bulk polymerization in a medium comprising largely monomer or in solution with a solvent as diluent for the monomers. For industrial uses, continuous polymerization processes are preferred. Homogeneous polymers are often preferred in the invention. For these polymers, preferably the polymerization process is a single stage, steady state, polymerization conducted in a well-mixed continuous feed polymerization reactor. The polymerization can be conducted in solution, although other polymerization procedures such as gas phase or slurry polymerization, which fulfil the requirements of single stage polymerization and continuous feed reactors, are contemplated.

The FPC may be produced advantageously by the continuous solution polymerization process described in WO 02/34795, advantageously in a single reactor and separated by liquid phase separation from the alkane solvent.

In certain embodiments, the FPC of the present invention may be produced in the presence of a chiral metallocene catalyst with an activator and optional scavenger. The use of single site catalysts is preferred to enhance the homogeneity of the polymer. As only a limited tacticity is needed many different forms of single site catalyst may be used. Possible single site catalysts are metallocenes, such as those described in U.S. Patent No. 5,026,798, which have a single cyclopentadienyl ring, advantageously substituted and/or forming part of a polycyclic structure, and a hetero-atom, generally a nitrogen atom, but possibly also a phosphorus atom or phenoxy group connected to a group 4 transition metal, preferably titanium but possibly zirconium or hafnium. A further example is $Me_5CpTiMe_3$ activated with $B(CF)_3$ as used to produce elastomeric polypropylene with an Mn of up to 4 million. *See* Sassmannshausen, Bochmann, Rosch, Lilge, J.Organomet. Chem. (1997) 548,23-28.

Other possible single site catalysts are metallocenes which are bis cyclopentadienyl derivatives having a group transition metal, preferably hafnium or zirconium. Such metallocenes may be unbridged as in U.S. Patent No. 4,522,982 or U.S. Patent No. 5,747,621. The metallocene may be adapted for producing a polymer comprising predominantly propylene derived units as in U.S. Patent No. 5,969,070 which uses an unbridged bis(2-phenyl indenyl) zirconium dichloride to produce a homogeneous polymer having a melting point of above 79°C. The cyclopentadienyl rings may be substituted and/or part of polycyclic systems as described in the above U.S. Patents.

Other possible metallocenes include those in which the two cyclopentadienyl groups are connected through a bridge, generally a single atom bridge such as a silicon or carbon atom with a choice of groups to occupy the two remaining valencies. Such metallocenes are described in U.S. Patent No. 6,048,950 which discloses bis(indenyl)bis(dimethylsilyl) zirconium dichloride and MAO; WO 98/27154 which discloses a dimethylsilyl bridged bisindenyl hafnium dimethyl together with a non-coordinating anion activator; EP1070087 which discloses a bridged biscyclopentadienyl catalyst which has elements of asymmetry between the two cyclopentadienyl ligands to give a polymer with elastic properties; and the metallocenes described in U.S. Patent Nos. 6,448,358 and 6,265,212.

The manner of activation of the single site catalyst can vary. Alumoxane and preferably methyl alumoxane can be used. Higher molecular weights can be obtained using non-or weakly coordinating anion activators (NCA) derived and generated in any of the ways amply described in published patent art such as EP277004, EP426637, and many others. Activation generally is believed to involve abstraction of an anionic group such as the methyl group to form a metallocene cation, although according to some literature zwitterions may be produced. The NCA precursor can be an ion pair of a borate or aluminate in which the precursor cation is eliminated upon activation in some manner, e.g. trityl or ammonium derivatives of tetrakis pentafluorophenyl boron (See EP277004). The NCA precursor can be a neutral compound such as a borane, which is formed into a cation by the abstraction of and incorporation of the anionic group abstracted from the metallocene (See EP426638).

In one embodiment, the FPC used in the present invention is described in detail as the "Second Polymer Component (SPC)" in WO 00/69963, WO 00/01766, WO 99/07788, WO 02/083753, and described in further detail as the "Propylene Olefin Copolymer" in WO 00/01745, all of which are fully incorporated by reference herein for purposes of U.S. patent practice.

To produce a copolymer with the required randomness and narrow composition distribution, one may use, for illustration, (1) a single sited catalyst and (2) a well-mixed, continuous flow stirred tank polymerization reactor which allows only a single polymerization environment for substantially all of the polymer chains of the alpha-olefin copolymer component.

In another embodiment, for example, a typical polymerization process comprises a polymerization in the presence of a catalyst comprising a chiral bis (cyclopentadienyl) metal compound and either 1) a non-coordinating compatible anion activator, or 2) an alumoxane activator. An exemplary catalyst system is described in U.S. Patent No. 5,198,401. Exemplary prochiral catalysts suitable for the preparation of crystalline and semi-crystalline polypropylene copolymers

include those described in U.S. Patent Nos. 5,145,819; 5,304,614; 5,243,001; 5,239,022; 5,329,033; 5,296,434; 5,276,208; 5,672,668; 5,304,614; and 5,374,752; and EP 549 900 and 576 970.

The alumoxane activator may be utilized in an amount to provide a molar aluminum to metallocene ratio of from 1:1 to 20,000:1 or more. The non-coordinating compatible anion activator may be utilized in an amount to provide a molar ratio of biscyclopentadienyl metal compound to non-coordinating anion of 10:1 to 1:1. In one embodiment, the above polymerization reaction is conducted by reacting such monomers in the presence of such catalyst system at a temperature of from -50°C to 200°C for a time of from 1 second to 10 hours to produce a copolymer.

While the process of embodiments of the present invention includes utilizing a catalyst system in the liquid phase (slurry, solution, suspension or bulk phase or combination thereof), gas phase polymerization can also be utilized. When utilized in a gas phase, slurry phase or suspension phase polymerization, the catalyst systems are generally supported catalyst systems. See, for example, U.S. Patent No. 5,057,475. Such catalyst systems can also include other well known additives such as, for example, scavengers. See, for example, U.S. Patent No. 5,153,157. These processes may be employed without limitation of the type of reaction vessels and the mode of conducting the polymerization. As stated above, and while it is also true for systems utilizing a supported catalyst system, the liquid phase process comprises the steps of contacting ethylene and propylene with the catalyst system in a suitable polymerization diluent and reacting the monomers in the presence of the catalyst system for a time and at a temperature sufficient to produce an ethylene-propylene copolymer of the desired molecular weight and composition.

Second Polymer Component (SPC)

In accordance with the present invention, the Second Polymer Component (SPC) comprises a propylene homopolymer, or a copolymer of propylene, or some mixtures propylene homopolymers and copolymers.

In certain embodiments, the polypropylene of the present invention is predominately crystalline, i.e., it has a melting point generally greater than 110°C, alternatively greater than 115°C, and most preferably greater than 130°C. The term "crystalline," as used herein, characterizes those polymers which possess high degrees of inter- and intra-molecular order. It has a heat of fusion greater than 60 J/g, alternatively at least 70 J/g, alternatively at least 80 J/g, as determined by DSC analysis. The heat of fusion is dependent on the composition of the polypropylene. A polypropylene homopolymer will have a higher heat of fusion than copolymer or blend of homopolymer and copolymer. Determination of this heat of fusion is influenced by treatment of the sample.

The SPC can vary widely in composition. For example, substantially isotactic polypropylene homopolymer or propylene copolymer containing equal to or less than 10 weight percent of other monomer, i.e., at least 90% by weight propylene can be used. Further, the polypropylene can be present in the form of a graft or block copolymer, in which the blocks of polypropylene have substantially the same stereoregularity as the propylene-alpha-olefin copolymer so long as the graft or block copolymer has a sharp melting point above 110°C and alternatively above 115°C and alternatively above 130°C, characteristic of the stereoregular propylene sequences. The SPC may be a combination of homopolypropylene, and/or random, and/or block copolymers as described herein. When the above SPC is a random copolymer, the percentage of the copolymerized alpha-olefin in the copolymer is, in general, up to 9% by weight, alternatively 0.5% - 8% by weight, alternatively 2% - 6% by weight. The preferred alpha-olefins contain 2 or from 4 to 12 carbon atoms. One, or two or more alpha-olefins can be copolymerized with propylene

Exemplary alpha-olefins may be selected from the group consisting of ethylene; butene-1; pentene-1,2-methylpentene-1,3-methylbutene-1; hexene-1,3-methylpentene-1,4-methylpentene-1,3,3-dimethylbutene-1; heptene-1; hexene-1; methylhexene-1; dimethylpentene-1 trimethylbutene-1; ethylpentene-1; octene-1; methylpentene-1; dimethylhexene-1; trimethylpentene-1; ethylhexene-1; methylethylpentene-1; diethylbutene-1; propylpentane-1; decene-1; methylnonene-1; nonene-1; dimethyloctene-1; trimethylheptene-1; ethyloctene-1; methylethylbutene-1; diethylhexene-1; dodecene-1 and hexadodecene-1.

The molecular weight of the SPC can be between 10,000 to 5,000,000, alternatively 50,000 to 500,000, with a polydispersity index (PDI) between 1.5 to 40.0.

In certain embodiments, the SPC comprises thermoplastic blends including from 0% - 95% by weight of the polypropylene polymer component. For example, the SPC of the present invention may include from 2% - 70% by weight of the polypropylene polymer component , alternatively 2% - 40%, alternatively 2% - 25% by weight of the polypropylene polymer component in the blend.

There is no particular limitation on the method for preparing SPC of the invention. However, for example, the polymer is a propylene homopolymer obtained by homopolymerization of propylene in a single stage or multiple stage reactor. Copolymers may be obtained by copolymerizing propylene and an alpha-olefin having 2 or from 4 to 20 carbon atoms in a single stage or multiple stage reactor. Polymerization methods include high pressure, slurry, gas, bulk, or solution phase, or a combination thereof, using a traditional Ziegler-Natta catalyst or a single-site, metallocene catalyst system, or combinations thereof including bimetallic (i.e, ZN and metallocene) supported catalyst systems. Polymerization may be carried out by a continuous or batch process and may include use of chain transfer agents, scavengers, or other

such additives as deemed applicable.

The crystalline polypropylene can be either homopolymer or copolymers with other alpha-olefins. The SPC may also be comprised of commonly available isotactic polypropylene compositions referred to as impact copolymer or reactor copolymer. However, these variations in the identity of the polypropylene polymer component are acceptable in the blend only to the extent that all of the components of the polypropylene polymer component are substantially similar in composition and the polypropylene polymer component is within the limitations of the crystallinity and melting point indicated above.

Exemplary commercial products of the polypropylene polymers in SPC includes the family of Achieve™ polymers available from ExxonMobil Chemical Company, Baytown, TX. The Achieve™ polymers are produced based on metallocene catalyst system. In certain embodiments, the metallocene catalyst system produces a narrow molecular weight distribution polymer. The molecular weight distribution (MWD) as measured by weight averaged molecular weight (Mw)/ number averaged molecular weight (Mn) is typically in the range of 1.5 to 2.5. However, a broader MWD polymer may be produced in a process with multiple reactors. Different MW polymers can be produced in each reactor to broaden the MWD. The Achieve™ product is suitable for this application because of the narrow MWD. The narrow MWD is preferred for producing fine denier fibers such as continuous filament, spunbond and melt blown processes. Achieve™ polymer such as Achieve™ 3854, a 24 MFR homopolymer can be used as a blend component for this invention. Alternatively, Achieve™ polymer such as Achieve™ 6936G1, a 1500 MFR homopolymer can be used as a blend component for this invention. Other polypropylene random copolymer and impact copolymer made from metallocene catalyst system may also be used. The choice of SPC MFR can be used as means of adjusting the final MFR of the blend.

Polypropylene homopolymer, random copolymer and impact copolymer produced by Ziegler-Natta catalyst system have a broad MWD. The resin can be modified by a process called controlled rheology to reduce the MWD to improve spinning performance. Example of such product is PP3155, a 36 MFR homopolymer available from ExxonMobil Chemical Company, Baytown, TX.

The SPC may also contain additives such as flow improvers, nucleators, slip additives, plasticizer, and antioxidants which are normally added to isotactic polypropylene to improve or retain properties. Other additives may also be added to improve the performance and aesthetic of the fabrics.

Blends of the FPC, SPC and Other Components

The blends may be prepared by any procedure that produces a mixture of the components, e.g., dry blending, melt blending, etc. In certain embodiments, a complete mixture of the polymeric components is indicated by the uniformity of the morphology of the dispersion of the polymer components.

Melt blend: Continuous melt mixing equipment are generally used. These processes are well known in the art and include single and twin screw compounding extruders as well as other machines and processes, designed to homogenize the polymer components intimately.

Dry blend: The FPC, SPC and other component may be dry blended and fed directly into the fiber or nonwoven process extruders. Dry blending is accomplished by combining FPC, SPC and other ingredients in a dry blending equipment. Such equipment and processes are well known in the art and include a drum tumbler, a double cone blender, etc. In this case, FPC, SPC and other ingredients are melted and homogenized in the process extruder similar to the melt blend process. Instead of making the pellets, the homogenzied molten polymer is delivered to the die or spinnerett to form the fiber and fabric.

According to still a further embodiment, the invention is directed to a process for preparing thermoplastic blends suitable for the preparation of elastic fibers. The process comprises: (a) polymerizing propylene or a mixture of propylene and one or more monomers selected from $C_2$ or $C_3$ - $C_{20}$ alpha olefins in the presence of a polymerization catalyst wherein a substantially isotactic propylene polymer containing at least 90% by weight polymerized propylene is obtained; (b) polymerizing a mixture of ethylene and propylene in the presence of a chiral metallocene catalyst, wherein a copolymer of ethylene and propylene is obtained comprising up to 35% by weight ethylene and preferably up to 20% by weight ethylene and containing isotactically crystallizable propylene sequences; and (c) blending the propylene polymer of step (a) with the copolymer of step (b) to form a blend.

According to still a further embodiment, the invention is directed to a process for preparing of elastic fibers from these thermoplastic polymer blends. For example, the process comprises the following: (a) generating the thermoplastic blend (as described above), (b) forming the elastic fiber by extrusion through a spinneret as described in the art, (c) optionally orienting the fiber uniaxially by extension to not greater than 700% of its original dimension and (d) annealing the resulting fibers for a period of time less than 1 hour under low tension at a temperature not to exceed 150 °C. The annealing and the orientation may be conducted in a single operation or as distinctive sequential operations.

In certain embodiments, where the FPC comprises the first alpha-olefin copolymer component and the second alpha-olefin copolymer component, the FPC has stereoregular propylene sequences long enough to crystallize. These stereoregular propylene sequences should match the stereoregularity of the propylene in the second polymer component.

For example, if the polypropylene polymer component is predominately isotactic polypropylene, then the first alpha-olefin copolymer component, and the optional second alpha-olefin copolymer component, are copolymers having isotactic propylene sequences. If the polypropylene polymer component is predominately syndiotactic polypropylene, then the first alpha-olefin copolymer component, and the optional second alpha-olefin copolymer component, is a copolymer having syndiotactic sequences. It is believed that this matching of stereoregularity increases the compatibility of the components resulting in improved adhesion of the domains of the polymers of different crystallinities in the blend composition.

In certain embodiments, the blends of the present invention may also comprise a third polymer component. The third polymer component may be added to the FPC, the SPC, or to a blend of the FPC and SPC by methods well known in the art. In these embodiments, the third polymer component (TPC) comprises low density polyethylene (density 0.915 to less than 0.935 g/cm$^3$), linear low density polyethylene, ultra low density polyethylene (density 0.85 to less than 0.90 g/cm$^3$), very low density polyethylene (density 0.90 to less than 0.915 g/cm$^3$), medium density polyethylene (density 0.935 to less than 0.945 g/cm$^3$), high density polyethylene (density 0.945 to 0.98 g/cm$^3$), or combinations thereof.

For example, polyethylene produced using a metallocene catalyst system (mPEs), i.e., ethylene homopolymers or copolymers may be employed. In a particular example, mPE homopolymers and copolymer are those produced using mono- or bis-cyclopentadienyl transition metal catalysts in combination with an activator of alumoxane and/or a non-coordinating anion in solution, slurry, high pressure or gas phase. The catalyst and activator may be supported or unsupported and the cyclopentadienyl rings by may substituted or unsubstituted. Illustrative but not exclusive commercially products are available from ExxonMobil Chemical Company, Baytown, Texas, under the tradenames EXCEED™ and EXACT™ among others well known in the industry.

The term "Chain scission" is defined as the process of using one or more free radical initiators to increase polymer melt flow rate (MFR). This is described in US Patent 6747114B2 which is incorporated here by reference for US purposes. A "free radical initiator" is defined as a molecular fragment having one or more unpaired electrons. A "peroxide" is defined as any compound having a bivalent O--O group; i.e., the oxygen atoms are univalent.

A polymer undergoes chain scission in accordance with this invention when the polymer, or a blend of polymers, is treated with a free radical initiator, e.g., peroxide, preferably while the polymer is in a melted state, more preferably in a fully melted state. Preferably, the chain scission is controlled. For example, when a free radical initiator is used, free radicals of the polymers being treated are produced by thermal scission of the peroxide. Other sources of free radicals such as diazo compounds may also be utilized. In any case, it is contemplated that the free radicals produced from the initiator (e.g., peroxide) abstract the tertiary hydrogen on the propylene residue of the first polymer component. The resulting free radical disproportionates to two lower molecular weight chains, one with an olefin near the terminus and the other a saturated polymer. This process can continue with the generation of successively lower molecular weight polymers. Since the site of the attack and scission of the chains is random, the distribution of the molecular weight of the resulting degraded polymer approaches the most probable (PDI=2) irrespective of the PDI of the initial polymer, where "PDI" refers to Polydispersity Index, defined as Mw/Mn, where Mw and Mn are measured by GPC. Thus, under the appropriate conditions, chain scission is initiated to cause controlled degradation of the polymer or polymer blend.

Crosslinking is a competing process that may occur during chain scission. In a crosslinking reaction, the free radicals combine to form branched macromolecules of higher molecular weight. Eventually, this synthesis reaction may lead to vulcanization of the polymer. In copolymers of ethylene and propylene, this balance of crosslinking and degradation is mainly dependent on the composition of the copolymer. Since the degradation reaction is uniquely associated with the propylene residues, lower amounts of propylene in the copolymer tend to favor crosslinking over degradation. However, it should be recognized that the scission and crosslinking reactions are not mutually exclusionary. That is, even during degradation, some amount of branching may occur. However, because the branching and scission reactions are random, these complementary processes should not lead to an increase in PDI. However, a polymeric material degraded as discussed herein preferably has a majority of branched molecules. The amount of branching depends on a number of variables, primarily the reaction conditions, the composition of the polymers and the extent of degradation. Random copolymers having a higher ethylene content should generate a higher level of branching than those with a lower ethylene content. Thus, in certain embodiments of this invention, the rate or extent of degradation is substantially proportional to the relative amounts of propylene and ethylene sites. For example, if too many ethylene sites are present, the use of the peroxide or other free radical initiator may result in crosslinking rather than chain scission, and the material being treated will not degrade to a higher MFR. Thus, an important aspect of certain specific embodiments of this invention relates to the relative amounts of the polymers used in the blend. In blends of the first polymer component and the second polymer component, these degradation processes occur for both of the polymers independently of each other. It is contemplated that the second polymer component degrades faster than the first polymer component under similar conditions. Thus, a blend of random copolymer and polypropylene with change in PDI during the degradation procedure with the polypropylene degrading to a lower molecular weight sooner than the random copolymer is contemplated.

One embodiment of the present invention is a blend preferably comprising a first polymer component having

a weight average molecular weight (Mw) preferably from about 15,000 to about 200,000 Daltons; more preferably from about 50, 000 and about 150,000 Daltons; and most preferably from about 65,000 and about 100,000 Daltons. The semi-crystalline propylene copolymer preferably has a melt index (MFR) as measured by ASTM D 1238(D) of from about 3000 dg/min to about 7 dg/min, more preferably from about 20 dg/min to about 900 dg/min, and most preferably from about 50 to about 630 dg/min and even more preferably between 60 to 500dg/min.

A specific embodiment of this invention is directed to blend compositions having an MFR greater than about 50 dg/min. at 230° C., the composition including a a first polymer component. It is understood that while the overall composition may include additional ingredients that may further increase the overall MFR of the composition, it is the MFR of the polymer or blend of polymers that is referred to herein, e.g., following treatment with a peroxide or other free radical initiator, which results in modification of the MFR of the polymer.

Another specific embodiment is directed to blend composition including the reaction product of a free radical initiator and a first polymer component. Preferably, the reaction product, a modified polymer, has an MFR of 50 or greater as discussed in greater detail elsewhere herein.

Another specific embodiment of the invention includes an polymer blend composition formed by treating a polymer composition in the melted state with a free-radical initiator in an amount effective to increase the MFR at 230° C. by at least 100%, more preferably at least 120 %, even more preferably at least 150 percent and most preferably 200%.

The free-radical initiator, e.g., peroxide, may be added to the polymer while the polymer is in a solid form, e.g., by coating polymer pellets with an initiator, such as peroxide, which may be in powder form, in which case the polymer is said to be "treated" with the initiator when the initiator becomes active, which usually happens at a temperature higher than melting point of the polymer. Preferably, however, the free- radical initiator is added to the polymer after the polymer has formed, but while the polymer is in a melted condition, e.g., during the post- polymerization processing, such as when a polymer mixture (which may include solvent) is introduced to a devolatalizer or extruder, which typically occurs at an elevated temperature.)

The term "melted" refers to the condition of the polymer when any portion of the polymer is melted, and includes both fully melted and partially melted. Preferably, the polymer is treated by the free-radical initiator while the temperature of the polymer is above its melting point.

One example of a peroxide is 2,5-bis(tert-butylperoxy)-2,5-dimethyl- hexane. Alternatively, the free radical initiator may include a diazo compound, or any other compound that promotes free radicals in an amount sufficient to cause degradation as specified herein.

In a specific embodiment a blend composition identified above may be simultaneously degraded through chain scission and crosslinked, wherein the extent of degradation through chain scission is greater than the extent of crosslinking. This is preferably accomplished by limiting the ethylene content in the polymer or polymer blend. Too high a level of ethylene (or alpha olefin) may cause the crosslinking to predominate, thus preventing chain scission and degradation. However, there is preferably sufficient ethylene to provide a melting point between 80 and 100 degrees C. Preferably, the ethylene or alpha olefin content is maintained below about 39 mole %.

Broadly, the blend compositions herein may have a molecular weight distribution between about 1.8 and 5.0. More narrowly, the adhesive compositions above may have a molecular weight distribution between about 2.0 and 3.2.

In any of the blend compositions herein, the first polymer component may be a branched random copolymer. In a specific embodiment, more than about 50% of the molecules of the random copolymer may be branched molecules. In a more specific embodiment, more than about 80% of the molecules of the random copolymer may be branched molecules.

In another specific embodiment, the first polymer component of the blend composition may include more than about 67 mole % by weight propylene units (e.g., C3/C2). More specifically, the random copolymer of the adhesive composition may include more than about 80% by weight propylene units.

In one embodiment, the free radical initiator used to form the reaction product may be in the amount of at least about 0.03 wt % and no greater than about 3.00 wt %, based on the weight of the first polymer component. Alternatively, the free radical initiator used to form the reaction product may be in the amount of at least about 0.05 wt % and no greater than about 2.00 wt %, based on the weight of the first polymer component. The ranges of the amounts of free radical initiators may fall between any of the amounts identified any of the Examples below, e.g., between 0.33 wt % and 1.00 wt %.

In any of the processes disclosed herein, the second polymer component may include isotactic polypropylene. The isotactic polypropylene may, for example, have a melting point greater than 110° C. More narrowly, isotactic polypropylene may have a melting point greater than 115° C. More narrowly still, the isotactic polypropylene having a melting point greater than 130° C.

Preferably, in any of the degradation processes disclosed herein, the first polymer component or any pre made blend containing the first polymer component is fully melted in the presence of the free radical initiator. When a free radical initiator is used, an effective amount of free radical initiator should be contacted with the first polymer composition. Preferably, the free radical initiator is present in an amount sufficient to increase the MFR of the first polymer composition.

More preferably, the free radical initiator is present in an amount sufficient to increase the MFR of the first polymer composition by at least 100% to form the second polymer composition.

In certain specific embodiments of the degradation process, the first polymer component has an MFR of less than 50 dg/min. at 230° C. In other specific embodiments, the first polymer composition has an MFR of less than 40 dg/min. at 230° C. In yet other specific embodiments, the first polymer composition has an MFR of less than 30 dg/min. at 230° C. In certain other embodiments of the degradation process, the first polymer composition has an MFR of less than 20 dg/min. at 230° C.

As mentioned above, the second polymer composition preferably has an MFR greater than 3 dg/min. at 230° C. As reflected in the examples below, however, with the present invention, the MFR can be higher than 5 dg/min. at 230° C., and for certain specific embodiments, the MFR may be greater than 10 dg/min. at 230° C. For example, the second polymer composition may have an MFR greater than 35 dg/min. at 230° C. For certain processes, the second polymer composition may have an MFR greater than 100 dg/min. at 230° C.

Additives

A variety of additives may be incorporated into the embodiments described above used to make the fibers and fabric for various purposes. Such additives include, for example, stabilizers, antioxidants, fillers, colorants, nucleating agents and slip additives. Primary and secondary antioxidants include, for example, hindered phenols, hindered amines, and phosphates. Nucleating agents include, for example, sodium benzoate and talc. Also, other nucleating agents may also be employed such as Ziegler-Natta olefin product or other highly crystalline polymer. Other additives such as dispersing agents, for example, Acrowax C, can also be included. Slip agents include, for example, oleamide and erucamide. Catalyst deactivators are also commonly used, for example, calcium stearate, hydrotalcite, and calcium oxide, and/or other acid neutralizers known in the art.

Other additives include, for example, fire/flame retardants, plasticizers, vulcanizing or curative agents, vulcanizing or curative accelerators, cure retarders, processing aids, tackifying resins, and the like. The aforementioned additives of may also include fillers and/or reinforcing materials, either added independently or incorporated into an additive. Examples include carbon black, clay, talc, calcium carbonate, mica, silica, silicate, combinations thereof, and the like. Other additives which may be employed to enhance properties include antiblocking agents, lubricants, and nucleating agents. The lists described herein are not intended to be inclusive of all types of additives which may be employed with the present invention. Upon reading this disclosure, those of skilled in the art will appreciate other additives may be employed to enhance properties. As is understood by the skilled in the art, the blends of the present invention may be modified to adjust the characteristics of the blends as desired.

Process oil

Process oils can be optimally added to the embodiments described above. The addition of process oil in moderate amounts lowers the viscosity and flexibility of the blend while improving the properties of the blend at temperatures near and below 0°C. It is believed that these benefits arise by the lowering of the Tg of the blend. Additional benefits of adding process oil to the blend include improved processibilty and a better balance of elastic and tensile strength.

The process oil is typically known as extender oil in the rubber application practice. The process oils can consist of (a) hydrocarbons consisting of essentially of carbon and hydrogen with traces of hetero atoms such as oxygen or (b) essentially of carbon, hydrogen and at least one hetero atom such as dioctyl phthalate, ethers and polyethers. The process oils have a boiling point to be substantially involatile at 200°C. These process oils are commonly available either as neat solids or liquids or as physically absorbed mixtures of these materials on an inert support (e.g. clays, silica) to form a free flowing powder.

The process oils usually include a mixture of a large number of chemical compounds which may consist of linear, acyclic but branched, cyclic and aromatic carbonaceous structures. Another family of process oils are certain low to medium molecular weight (Molecular weight ($M_n$) <10,000) organic esters and alkyl ether esters. Examples of process oils are Sunpar® 150 and 220 from The Sun Manufacturing Company of Marcus Hook, PA, USA and Hyprene® V750 and Hyprene V1200 from Ergon, Post Office Box 1639, Jackson, MS 39215-1639, USA. and IRM 903 from Calumet Lubricants Co., 10234 Highway 157, Princeton, LA 71067-9172, USA. It is also anticipated that combinations of process oils each of which is described above may be used in the practice of the invention. In certain embodiments, it is important that in the selection of the process oil be compatible or miscible with the blend composition in the melt to form a homogenous one phase blend, although two phase blends and multi-phase blends are also contemplated.

The addition of the process oils to the blend or blend polymer components maybe made by any of the conventional means known to the art.

The addition of certain process oils to lower the glass transition temperature of the blends of isotactic polypropylene and ethylene propylene diene rubber has been described in the art by Ellul in U.S. Patent Nos. 5,290,886 and 5,397,832. These procedures are easily applicable to the current invention.

The blend may include process oil in the range of from 1 to 50, alternatively in the range of from 2 to 20 parts by weight of process oil per hundred parts of total polymer components.

Plasticizers

In certain embodiments the various components, i.e., FPC and SPC, as well as their blends may include various amounts of plasticizer(s). In one embodiment, the plasticizer comprises $C_6$ to $C_{200}$ paraffins, and $C_8$ to $C_{100}$ paraffins in another embodiment. In another embodiment, the plasticizer consists essentially of $C_6$ to $C_{200}$ paraffins, and consists essentially of $C_8$ to $C_{100}$ paraffins in another embodiment. For purposes of the present invention and description herein, the term "paraffin" includes all isomers such as n-paraffins, branched paraffins, isoparaffins, and may include cyclic aliphatic species, and blends thereof, and may be derived synthetically by means known in the art, or from refined crude oil in such a way as to meet the requirements described for desirable NFPs described herein.

Suitable plasticizers also include "isoparaffins", "polyalphaolefins" (PAOs) and "polybutenes" (a subgroup of PAOs). These three classes of compounds can be described as paraffins which can include branched, cyclic, and normal structures, and blends thereof. They can be described as comprising $C_6$ to $C_{200}$ paraffins in one embodiment, and $C_8$ to $C_{100}$ paraffins in another embodiment.

The plasticizer may be present in the individual components and/or the blends of the invention from 0.1 wt% to 60 wt% in one embodiment, and from 0.5 wt% to 40 wt% in another embodiment, and from I wt% to 20 wt% in yet another embodiment, and from 2 wt% to 10 wt% in yet another embodiment, wherein a desirable range may comprise any upper wt% limit with any lower wt% limit described herein.

INDUSTRIAL APPLICABILITY

The elastic fabrics of the invention enjoy wide application spanning several industries. For example, elastic fabrics of the invention may be used in the manufacture of hygiene products. Examples include diapers (child and adult) and feminine hygiene products (tampons and pads). The elastic fabrics of the invention are also useful for medical products. Examples include medical fabric for gowns, linens, towels, bandages, instrument wraps, scrubs, masks, head craps, and drapes. Additionally, the elastic fabrics of the invention are useful in the manufacture of consumer products. Examples include seat covers, domestic linens, tablecloths, and car covers. It is also contemplated that the inventive elastic fabrics may make-up either a portion or a component of the articles described above.

EXAMPLES

Examples of Fiber Formation

Four examples were prepared according the following general procedure. The melt blended resin system containing FPC and SPC was fed into the fiber spinning extruder. The fiber spinning was carried out in a conventional fiber spinning line under POY (partially oriented yarn) mode. It was equipped with a two inch diameter single screw extruder. The molten polymer from the extruder was fed to a melt pump, which delivers the molten polymer to a spinneret. The spinneret contained 72 capillaries, each with a diameter of 0.6 mm. The molten polymer exiting the spinneret was quenched by the cold air at 60 degree F and at the speed of 60 ft/min. The quenched fiber was taken up by a mechanical roll (or godet) which can be varied from 0 to 5000 meter/min. To measure the maximum spinning speed of the sample, the output rate was maintained constant at 0.6 gram/hole/min. The speed of the godet was increased gradually which increases the fiber speed and reduces the fiber diameter. The speed was increased until the fiber break occurred. The speed at which the fiber break occurred was the maximum spinning speed of that sample. The same process is repeated three times and the average reading is recorded.

Table 2: Comparative Examples on Fiber Spinning

| Fiber spinning | | | | |
|---|---|---|---|---|
| | | | | |
| | Example 1 | Example 2 | Example 3 | Example 4 |
| Blend component | | | | |
| % FPC * | 80 | 90 | 80 | 90 |

(continued)

| | Example 1 | Example 2 | Example 3 | Example 4 |
|---|---|---|---|---|
| % SPC1 ** | 20 | 10 | | |
| % SPC2 *** | | | 20 | 10 |
| Blend properties | | | | |
| MFR | 23 | 21 | 35 | 25 |
| Delta H, j/g (2nd melt) | 20 | 10 | 20 | 10 |
| Mw | 141473 | 144139 | 125868 | 128465 |
| Fiber spinning properties | | | | |
| Melt temperature | 450 | 450 | 450 | 450 |
| output rate, gram/hole/min | | | | |
| quench air temp. | 60 °F (16°C) | 60 °F (16°C) | 60 °F (16°C) | 60 °F (16°C) |
| Quench air flow rate | 60 ft/min | 60 ft/min | 60 ft/min | 60 ft/min |
| Maximum spinning speed, m/min | 3280 | 4270 | | |

* FPC: copolymer of propylene and ethylene containing 15% ethylene, 20 MFR.
** SPC1 : PP3155, a 36 MFR polypropylene homopolymer manufactured by ExxonMobil Chemical Company
*** SPC2: PP3505G, a 400 MFR polypropylene homopolymer manufactured by ExxonMobil Chemical Company

Examples of Spunbond Fabric

Spunbond Fabrics can be produced in general according to the following procedure. The spunbond system uses a 1 meter wide single spunbond beam line manufactured by Reifenhasuer GmbH. The melt blended or dry blended resin system containing FPC and SPC is fed into the extruder of the spunbond system. The output rate can range from 0.2 to 0.4 gram/hole/min, depending on the desired fiber size. The processing conditions are very similar to spunbond fabrication using conventional polypropylene homopolymers.

In particular, nine examples of spunbond fabrics were produced. The polymer blend of FPC and SPC was prepared by melt blending the FPC and SPC in a single screw extruder including pelletization to produce pellets containing well homogenized FPC and SPC. However, a dry blend of FPC and SPC may be dry blended and fed directly into the extruder of the spunbond process. In this case, a screw design having good mixing capability is generally preferred.

The extruder of the spunbond system delivered the homogenized molten to a melt pump, which delivered the molten polymer to the spin beam. The spin beam had approximately a 1 meter wide rectangular spinneret having approximately 4000 holes. Each hole had a diameter of 0.6 mm. The molten polymer thread exiting the spinneret was quenched and drawn down into fine fibers by the cold air. The quenched and highly drawn fiber were deposited on a moving porous web (forming web) to form a mate of nonwoven web. The unbonded web was then passed through a calender roll which is heated to approximately 200°F (93 °C). As the web was passed through the nip of the calender, the fiber was annealed, in a single step, and the elasticity of the fiber was enhanced. Hence, the bonded nonwoven fabric is elastic, having good stretchability and low permanent set. Table 3 contains additional fabric properties as follows.

Table 3: Comparative Examples of Spunbond Fabric

| Example no. | 1.1 | 1.2 | 1.3 | 1.4 | 1.5 | 1.6 | 2.1 | 2.2 | 2.3 |
|---|---|---|---|---|---|---|---|---|---|
| Resin formulation and properties | | | | | | | | | |
| % FPC * | 80 | 80 | 80 | 80 | 80 | 80 | 90 | 90 | 90 |
| % SPC ** | 20 | 20 | 20 | 20 | 20 | 20 | 10 | 10 | 10 |
| MFR | 23 | 23 | 23 | 23 | 23 | 23 | 21 | 21 | 21 |
| Delta H, J/gram (2nd melt) | 20 | 20 | 20 | 20 | 20 | 20 | 10 | 10 | 10 |
| Mw | 141473 | 141473 | 141473 | 141473 | 141473 | 141473 | 144139 | 144139 | 144139 |
| Processing conditions | | | | | | | | | |
| melt pump rpm | 9 | 9 | 9 | 14 | 14 | 14 | 9 | 9 | 9 |
| output, gram/hole/ming | 0.2 | 0.2 | 0.2 | 0.3 | 0.3 | 0.3 | 0.2 | 0.2 | 0.2 |
| suction blower rpm | 840 | 1189 | 1189 | 1189 | 1189 | 1786 | 840 | 1169 | 1205 |
| cooling air rpm | 1254 | 1510 | 1510 | 1510 | 1510 | 2015 | 1254 | 1580 | 1529 |
| Extruder pressure, psi (kPa) | 1896 (13,072) | 1903 (13,121) | 1930 (13,307) | 2125 (14,651) | 2120 (14,617) | 2093 (14,431) | 976 (6729) | 997 (6874) | 1045 (7205) |
| Die pressure, psi (kPa) | 399 (2751) | 400 (2758) | 406 (2799) | 440 (3034) | 405 (2792) | 405 (2792) | 402 (2772) | 403 (2779) | 404 (2785) |
| Screw speed, rpm | 54 | 55 | 54 | 80 | 82 | 82 | 27 | 30 | 32 |
| Quench air temperature, F (C) | 49 (9) | 43(6) | 44(7) | 16 (-9) | 26 (-3) | 23 (-5) | 31 (-1) | 23 (-5) | 18 (-8) |
| Upper calender roll temp. F (C), set/actual | 219/206 (104/97) | 219/207 (102/96) | 219/208 (104/98) | 219/209 (104/98) | 190/182 (88/83) | 190/183 (88/83) | 180/181 (82/82) | 180/180 (82/82) | 180/179 (82/82) |
| Lower calender roll temp., F (C), set/actual | 215/204 (102/96) | 215/205 (104/97) | 215/206 (102/97) | 215/207 (102/97) | 185/175 (85/79) | 185/174 (85/79) | 176/169 (80/76) | 176/170 (80/77) | 176/176 (80/80) |
| Fabric Properties | | | | | | | | | |
| Basis wt., grams/sq. meter | 65.7 | 68.9 | 35.3 | 70 | 35 | 70 | 62 | 62 | 98 |
| Peak tensile, MD, lbs (kg) | 3.39 (1.54) | 8.32 (3.78) | 3.02 (1.37) | 4.57 (2.08) | 1.88 (0.85) | 9.32 (4.24) | 1.18 (0.54) | 3 (1.36) | 4.75 (2.16) |
| Peak elongation, MD, % | 163.8 | 155.6 | 114.34 | 180.4 | 144.41 | 155.4 | 196 | 198 | 224 |
| Peak tensile, CD, lbs (kg) | 2.32 (1.05) | 4.59 (2.09) | 1.8 (0.82) | 3.7 (1.68) | 1.27 (0.58) | 6.1 (2.77) | 0.89 (0.40) | 1.79 (0.81) | 2.98 (1.35) |

(continued)

| Fabric Properties | | | | | | | | | |
|---|---|---|---|---|---|---|---|---|---|
| Peak elongation, CD, % | 196.8 | 189.1 | 155.8 | 213 | 184 | 196 | 237 | 298 | 292 |

Note: Melt temperature 450 F and calender roll pressure 100 lb per linear inch. Ca
* FPC: copolymer of propylene and ethylene containing 15% ethylene, 20 MFR.
** SPC: PP3155, a 36 MFR polypropylene homopolymer manufactured by ExxonMobil Chemical Company

Examples of Melt Blown Fabric

Table 4 shows two inventive examples (Sample A and Sample B) processed under different conditions and compared against conventional polypropylene homopolymer of comparable melt flow rate range (20-40 MFR). The fabrics were produced on a 500mm wide melt blown line manufactured by Reifenhauser GmbH & Co. The processing conditions were as noted in Table 4.

The polymer blends of Sample A and Sample B were prepared by melt blending the FPC and SPC in a single screw extruder including pelletization to produce pellets containing well homogenized FPC and SPC. However, a dry blend of FPC and SPC may be dry blended and fed directly into the extruder of the melt blown process.

The melt blended pellets were introduced into the extruder of the melt blown process. After the polymer had been melted and homogenized in the extruder due to the shear and external heat, the extruder delivered the homogenized molten polymer to a melt pump, which delivered the molten polymer to the melt blown die. The die consisted of a "coat hanger" to distribute the melt from the entrance to the die body to the whole width of the die. The molten polymer had filtered and flowed to the die tip, which is basically a single row of capillaries (melt blown die tip). The capillary of each hole was 0.4 mm in diameter. The molten polymer exiting the die was attenuated by the high velocity air which is heated to near the same temperature as the molten polymer at the die. The air was supplied by a compressor, heated and introduced to the die body, Those who are skilled in the art are familiar with the general set up of the melt blown process. The air gap where the hot air exit was set at 0.8 mm and the set-back of the die tip was also set at 0.8 mm. This allowed the air to exit at high velocity and attenuation of the fiber. The fiber exiting the die tip was attenuated first by the hot air and then quenched by the ambient air. The melt blown fiber was then collected on the moving porous belt (forming belt) to form the nonwoven melt blown web. The web had sufficient strength that no thermal bonding was required. The web was then tested for the physical properties.

Table 4: Comparative Examples of Melt Blown Fabrics

| Resin | | | | | | | | |
|---|---|---|---|---|---|---|---|---|
| Sample ID | Sample A | Sample A | Sample A | Sample B | Sample B | Sample B | PP3155 | PP3155 |
| %FPC * | 60 | 60 | 60 | 80 | 80 | 80 | 0 | 0 |
| % SPC ** | 40 | 40 | 40 | 20 | 20 | 20 | 100 | 100 |
| Final MFR | 25 | 25 | 25 | 23 | 23 | 23 | 36 | 36 |
| Processing conditions | | | | | | | | |
| Rate, kg/hr | 7.2 | 14 | 21.3 | 7.1 | 21.3 | 21 | 7.1 | 21.4 |
| Rate, gram/hole/min | 0.2 | 0.4 | 0.6 | 0.2 | 0.6 | 0.6 | 0.2 | 0.6 |
| Air flow, scfm | 166 | 166 | 166 | 166 | 166 | 225 | 166 | 166 |
| Air press, mbar | 100 | 100 | 100 | 100 | 100 | 189 | 99 | 99 |
| Air Temp., C | 295 | 295 | 295 | 295 | 295 | 295 | 295 | 295 |
| Melt temp., C | 290 | 290 | 290 | 290 | 290 | 290 | 290 | 290 |
| Die tip press., psi (kPa) | 40 (276) | 80 (552) | 150 (1034) | 50 (345) | 190 (1310) | 200(1379) | 20 (138) | 30 (207) |
| Fabric Properties | | | | | | | | |
| Basis wt., grams/sq. meter | 93 | 84 | 86 | 88 | 80 | 80 | 82 | 84 |
| CD break force, lb (kg) | 0.74 (0.34) | 0.57 (0.26) | 0.59 (0.27) | 0.46 (0.2 1) | 0.45 (0.20) | 0.41 (0.19) | 2.86 (1.30) | 1.84(0.84) |
| CD break elongation, % | 83.3 | 80.86 | 74.11 | 176.92 | 171.23 | 124.76 | 144.1 | 55.6 |
| CD peak force, lb (kg) | 0.98 (0.45) | 0.87 (0.40) | 1 (0.45) | 0.65 (0.30) | 0.68 (0.31) | 0.55(0.25) | 4.29 (1.95) | 3.69 (1.68) |
| CD peak elongation, % | 81.04 | 77.17 | 70.12 | 171.83 | 161.84 | 119.76 | 135 | 51.84 |
| MD break force, lb (kg) | 0.84 (.38) | 0.85 (0.39) | 0.71 (0.32) | 0.64 (0.29) | 0.51 (0.23) | 0.5 (0.23) | 3.16 (1.64) | 1.85 (0.84) |
| MD break elongation, % | 63.53 | 62.39 | 56.32 | 186.79 | 150.58 | 105.54 | 120.7 | 39.9 |
| MD peak force, lb (kg) | 1.03 (0.47) | 0.97(0.44) | 1.06 (0.48) | 0.88 (0.40) | 0.75 (0.34) | 0.68 (0.31 ) | 4.29 (1.95) | 3.66 (1.66) |
| MD peak elongation, % | 61.52 | 59.8 | 54.62 | 179.44 | 144.39 | 101.82 | 111.7 | 36.33 |

Note: Air temperature 295°C, melt temperature 290°C, and die-to-collector distance 14 inches in all tests.
* FPC: copolymer of propylene and ethylene containing 15% ethylene, 20 MFR.
** SPC: PP3155, a 36 MFR polypropylene homopolymer

The fabric properties are plotted in Figures 1 and 2. It is apparent that the inventive fabrics have a higher elongation than the conventional PP homopolymer fabric. The higher elongation and lower peak force are indications of the good elasticity of the inventive fabric.

Examples of Chain Scission Process

Chain scission was conducted in a 96 mm twin-screw extruder with L:D of 51:1. The liquid peroxide (Luperox 101 available from AutoFina) was injected at the throat of the extruder. Typical temperature profile for the extruder was set at 300 °F (149°C), 350 °F (177°C), 375 °F (191°C), 400 °F (204°C), 375 °F (191°C), 350 °F (177°C), 325 °F (163°C), 300 °F (149°C).

VM 2000 was the propylene ethylene copolymer containing 15 wt% ethylene and a MFR at 230 C of 20 available from ExxonMobil Chemical Co, Houston, TX. ESC PP3155 is a homoisotactic polypropylene of 36 MFR available from ExxonMobil Chemical Co, Houston, TX. The blend compositions and MFRs are shown in Table 5 below.

Table 5: Examples Using Chain Scission Process

| | Control | 1 | 2 | 3 | 4 | 5 | 6 | 7 | 8 |
|---|---|---|---|---|---|---|---|---|---|
| VM2000 | 85 | 85 | 85 | 85 | 85 | 85 | 85 | 85 | 85 |
| ESC PP3155 | 15 | 15 | 15 | 15 | 15 | 15 | 15 | 15 | 15 |
| Luperox 101 (ppm on all polymers) | 0 | 200 | 400 | 800 | 1200 | 2000 | 3000 | 4000 | 6000 |
| Product: MFR (dg/min) | 23 Comparative | 42 Comparative | 57 | 95 | 136 | 217 | 330 | 413 | 670 |

| | 9 | 10 | 11 | 12 | 13 | 14 |
|---|---|---|---|---|---|---|
| VM2000 | 70 | 70 | 70 | 70 | 70 | 70 |
| ESC PP3155 | 30 | 30 | 30 | 30 | 30 | 30 |
| Luperox 101 (ppm on all polymers)) | 200 | 400 | 800 | 1200 | 2000 | 3000 |
| MFR (dg/min) | 46 Comparative | 62 | 103 | 145 | 246 | 408 |

Examples of Spunbond Fabric Made Using Chain Scissioned Polymer

The spunbond fabric formation was conducted by using a 1 meter wide Reicofil 2 spunbond line located at the Textile and Nonwovens Development Center (TANDEC) at the University of Tennessee, Knoxville, TN. The Reicofil spunbond process is widely used in the industry and is familiar by those who are skilled in the art. The detail of the process is described earlier in this patent application.

The spunbond fabric formation was conducted by running the process at the constant capillary output rate of 0.2 gram per hole per minute (ghm) and at 0.4 ghm. For a given output rate, the quench air blower rpm is increased to maximum before the fiber break occurs. The higher the blower RPM, the greater the draw force applied to the fiber at the fiber drawing unit and therefore, the finer the fiber diameter. A finer fiber diameter produces a more uniform nonwoven fabric. The following polymers were used:

| Resin ID | PPM peroxide used to CR | Resin MFR |
|---|---|---|
| comparative | 0 | 23 |
| control comparative 1 | 200 | 41 |
| 2 | 400 | 56 |
| 3 | 800 | 96 |
| 4 | 1,200 | 135 |

Figure 7 compares the maximum draw force that can be applied to the fiber. Figure 8 shows the fiber diameter of each sample at different output rate using the draw force shown in Figure 7.

Although the finer fibers obtained with the higher MFR have a higher molecular orientation, the fabrics still maintain the similar elastic properties as shown in their elongational characteristics (Figure 9). The results shows that inventive compositions may be chain scissioned to a higher MFR and the resulting polymer has a substantially improved spinnability as demonstrated by it's capability to sustain a higher draw force and obtain a more uniform spunbond web with a finer fiber diameter.

Table 6A: Comparative Examples of Spunbond Fabric

| Example no. | 1.1 | 1.2 | 1.3 | 1.4 | 1.5 | 1.6 | 1.7 | 1.8 |
|---|---|---|---|---|---|---|---|---|
| Resin formulation and properties | | | | | | | | |
| % FPC * | 85 | 85 | 85 | 85 | 85 | 85 | 85 | 85 |
| % SPC ** | 15 | 15 | 15 | 15 | 15 | 15 | 15 | 15 |
| MFR | 23 | 23 | 23 | 23 | 41 | 41 | 41 | 41 |
| Processing conditions | | | | | | | | |
| melt pump rpm | 9.3 | 9.3 | 18.6 | 18.6 | 9.3 | 9.3 | 18.6 | 18.6 |
| output, gram/hole/ming | 0.2 | 0.2 | 0.4 | 0.4 | 0.2 | 0.2 | 0.4 | 0.4 |
| suction blower rpm | 1266 | 1274 | 1768 | 1768 | 1867 | 1867 | 2268 | 2269 |
| cooling air rpm | 1632 | 1640 | 2114 | 2116 | 2228 | 2230 | 2805 | 2820 |
| Die pressure, psi | 350 | 350 | 580 | 580 | 210 | 210 | 390 | 390 |
| Screw speed, rpm | 53 | 53 | 100 | 100 | 52 | 52 | 100 | 100 |
| Quench air temperature, F | 60 | 60 | 59 | 59 | 46 | 46 | 48 | 50 |
| Upper calender roll temp. F, set/actual | 180/180 | 180/180 | 180/180 | 180/180 | 180/180 | 180/180 | 180/180 | 180/180 |
| Lower calender roll temp., F, set/actual | 178/168 | 178/168 | 178/168 | 178/168 | 178/168 | 178/168 | 178/168 | 178/168 |
| Fabric Properties | | | | | | | | |
| Basis wt., grams/sq. meter | 71 | 38 | 75 | 38 | 78 | 41 | 75 | 40 |
| Peak tensile, MD, lbs | 9.0 | 3.4 | 4.8 | 2.0 | 11.6 | 4.8 | 6.6 | 2.8 |
| Peak elongation, MD, % | 225 | 198 | 221 | 210 | 205 | 181 | 199 | 191 |
| Peak tensile, CD, lbs | 5.2 | 2.2 | 3.8 | 1.5 | 6.6 | 2.9 | 4.2 | 1.8 |

(continued)

| | | | | | | | | |
|---|---|---|---|---|---|---|---|---|
| Fabric Properties | | | | | | | | |
| Peak elongation, CD, % | 255 | 225 | 264 | 228 | 239 | 224 | 225 | 218 |
| Tension Set, MD, % | 17 | 17 | 18 | 18 | 19 | 17 | 18 | - |
| Tension Set, CD, % | 23 | 21 | 22 | 23 | 22 | 23 | 21 | - |

Table 6B: Examples according to the invention of Spun bond Fabric

| Example no. | 1.9 | 1.10 | 1.11 | 1.12 |
|---|---|---|---|---|
| Resin formulation and properties | | | | |
| % FPC * | 85 | 85 | 85 | 85 |
| % SPC ** | 15 | 15 | 15 | 15 |
| MFR | 56 | 56 | 56 | 56 |
| Processing conditions | | | | |
| melt pump rpm | 9.3 | 9.3 | 18.6 | 18.6 |
| output, gram/hole/ming | 0.2 | 0.2 | 0.4 | 0.4 |
| suction blower rpm | 2168 | 2168 | 2477 | 2477 |
| cooling air rpm | 2569 | 2551 | 3006 | 3006 |
| Die pressure, psi | 160 | 160 | 300 | 300 |
| Screw speed, rpm | 53 | 54 | 106 | 105 |
| Quench air temperature, F | 56 | 57 | 57 | 56 |
| Upper calender roll temp. F, set/actual | 180/180 | 180/180 | 180/180 | 180/180 |
| Lower calender roll temp., F, set/actual | 178/168 | 178/168 | 178/168 | 178/168 |
| Fabric Properties | | | | |
| Basis wt., grams/sq. meter | 74 | 40 | 73 | 38 |
| Peak tensile, MD, lbs | 9.8 | 4.4 | 5.8 | 2.6 |
| Peak elongation, MD, % | 187 | 184 | 202 | 188 |
| Peak tensile, CD, lbs | 5.9 | 4.6 | 3.7 | 1.7 |
| Peak elongation, CD, % | 254 | 185 | 243 | 222 |
| Tension Set, MD, % | 19 | 19 | 17 | 16 |
| Tension Set, CD, % | 21 | 25 | 22 | 22 |

Table 6C: Examples according to the invention of Spunbond Fabric

| Example no. | 2.1 | 2.2 | 2.3 | 2.4 | 2.5 | 2.6 | 2.7 | 2.8 | 2.9 |
|---|---|---|---|---|---|---|---|---|---|
| Resin formulation and properties | | | | | | | | | |
| % FPC * | 85 | 85 | 85 | 85 | 85 | 85 | 85 | 85 | 85 |
| % SPC ** | 15 | 15 | 15 | 15 | 15 | 15 | 15 | 15 | 15 |
| MFR | 96 | 96 | 96 | 96 | 135 | 135 | 135 | 135 | 135 |
| Processing conditions | | | | | | | | | |
| melt pump rpm | 9.3 | 9.3 | 18.6 | 18.6 | 9.3 | 9.3 | 18.6 | 18.6 | 18.6 |
| output, gram/hole/ming | 0:2 | 0.2 | 0.4 | 0.4 | 0.2 | 0.2 | 0.4 | 0.4 | 0.4 |
| suction blower rpm | 2461 | 2461 | 2461 | 2460 | 2464 | 2461 | 2462 | 2461 | 2461 |
| cooling air rpm | 3009 | 3003 | 3008 | 3016 | 3009 | 3002 | 3024 | 3010 | 3009 |
| Die pressure, psi | 170 | 170 | 310 | 310 | 120 | 120 | 250 | 250 | 250 |
| Screw speed, rpm | 54 | 55 | 110 | 105 | 54 | 54 | 102 | 104 | 102 |
| Quench air temperature, F | 55 | 56 | 48 | 49 | 59 | 58 | 56 | 46 | 48 |
| Upper calender roll temp. F, set/actual | 180/180 | 180/180 | 180/180 | 180/180 | 180/180 | 180/180 | 180/180 | 180/180 | 180/180 |
| Lower calender roll temp., F, set/actual | 178/168 | 178/168 | 178/168 | 178/168 | 178/168 | 178/168 | 178/168 | 178/168 | 178/168 |
| Fabric Properties | | | | | | | | | |
| Basis wt., grams/sq. meter | 79 | 39 | 74 | 38 | 76 | 44 | 75 | 37 | 108 |
| Peak tensile, MD, lbs | 10.2 | 4.8 | 4.7 | 2.0 | 9.3 | 4.4 | 3.8 | 2.0 | |
| Peak elongation, MD, % | 163 | 136 | 189 | 158 | 168 | 163 | 179 | 172 | |
| Peak tensile, CD, lbs | 5.3 | 2.2 | 3.1 | 2.1 | 4.7 | 2.3 | 2.5 | 1.4 | 4.3 |
| Peak elongation, CD, % | 203 | 175 | 209 | 168 | 205 | 204 | 203 | 199 | 226 |
| Tension Set, MD, % | 24 | 25 | 23 | 25 | 24 | 23 | 23 | 23 | 22 |
| Tension Set, CD, % | 30 | 34 | 27 | 33 | 29 | 30 | 30 | 30 | |

Examples of Meltblown Fabric Made Using Chain Scissioned Polymer

VM2210, a 85/15 blend of Vistamaxx (85%) and polypropylene homopolymer (PP3155) was chain scissioned to a higher MFR to evaluate improvement in spinnability and fabric properties for melt blown nonwoven process. Table 7 below shows the resin MFR and peroxide used to produce the higher MFR suitable for the melt blown process:

Table 7.

| Resin ID | PPM peroxide used for CR | Resin MFR |
|---|---|---|
| Comparative VM2210 | 0 | 23 |
| Comparative PLTD 1815 | 200 | 41 |
| PLTD 1817 | 800 | 96 |
| PLTD 1818 | 1200 | 135 |
| PLTD 1819 | 2000 | 215 |
| PLTD 1820 | 3000 | 330 |
| PLTD 1827 | 4000 | 420 |
| PLTD 1828 | 6000 | 670 |

The trial was conducted on a pilot melt blown line located at the Textile and Nonwovens Development Center (TANDEC) at the University of Tennessee. The pilot line has a 6" wide die with the hole density of 25 holes per inch. The air gap and die set back were set at 0.030" in one test and 0.080 in another test. The melt temperatures were 480 F, 500 F, 530 F, and 560 F. The output rate was set at 0.4 gram per die hole per min. for most of the trial. The die-to-collector distance was set at 20".

It was observed that the higher the melt MFR samples favor a lower processing temperature and the lower MFR samples favor a higher processing temperature. However, the higher MFR resin (> 100 MFR) resin has the advantage over the lower MFR because of the lower processing temperature and the lower die pressure. The fabrics produced from the high MFR samples possess good fiber formation and elasticity.

Table 8

| Resin ID | rpm peroxide used | Resin MFR | Fabric: MD peak force lb (kg) | Fabric: MD peak elongation % | Air permeability cm3/cm2-sec |
|---|---|---|---|---|---|
| PLTD 1817 | 800 | 96 | 2.21 (1.00) | 146.11 | 61.25 |
| PLTD 1818 | 1200 | 135 | 2.45 (1.11) | 159.77 | 63.42 |
| PLTD 1819 | 2000 | 215 | 2.22 (1.01) | 134.39 | 34.03 |
| PLTD 1820 | 3000 | 330 | 2.09 (0.95) | 105.47 | 43.97 |
| PLTD 1827 | 4000 | 420 | 1.81 (0.82) | 92.6 | 37.68 |
| PLTD 1828 | 6000 | 670 | 1.87 (0.85) | 49.5 | 44.23 |

All patents and patent applications, test procedures (such as ASTM methods), and other documents cited herein are fully incorporated by reference to the extent such disclosure is not inconsistent with this invention and for all jurisdictions in which such incorporation is permitted.

When numerical lower limits and numerical upper limits are listed herein, ranges from any lower limit to any upper limit are contemplated.

While the illustrative embodiments of the invention have been described with particularity, it will be understood

that various other modifications will be apparent to and can be readily made by those skilled in the art without departing from the spirit and scope of the invention. Accordingly, it is not intended that the scope of the claims appended hereto be limited to the examples and descriptions set forth herein but rather that the claims be construed as encompassing all the features of patentable novelty which reside in the present invention, including all features which would be treated as equivalents thereof by those skilled in the art to which the invention pertains.

## Claims

1. A nonwoven fabric made from a blend comprising:

   a first component comprising from 50% to 99% by weight based on the total weight of the blend composition of a random copolymer of propylene comprising 72 wt% to 90 wt% of propylene derived units and 10 wt% to 28 wt% of ethylene derived units, the copolymer having a heat of fusion as determined by DSC of less than 50 J/g and stereoregular propylene crystallinity; and
   a second component comprising from 50% to 1% by weight based on the total weight of the blend composition of a propylene polymer or blends of propylene polymers, the propylene polymer or the blends of propylene polymers having a heat of fusion as determined by DSC of greater than 60 J/g;
   wherein the blend has a melting point between 80°C and 100°C, and wherein the blend has undergone chain scission, the chain scissioned blend having a MFR of 50dg/min. or greater (according to ASTM D-1238 (230°C, 2.16 kg)), and wherein the nonwoven fabric has a permanent set {100x(D0-D2)/D0} of from less than 60%.

2. The nonwoven fabric of claim 1 having a permanent set {100x(D0-D2)/D0} of from less than 15%.

3. The nonwoven fabric of claims 1 or 2, wherein the nonwoven fabric has an elongation of from greater than 150%.

4. The nonwoven fabric of claim 1, wherein the nonwoven fabric has an elongation of from greater than 300%.

5. The nonwoven fabric of any of the preceding claims, wherein the nonwoven fabric demonstrates anisotropic elongation.

6. The nonwoven fabric of any of the preceding claims, wherein the first component has isotactic stereoregular propylene crystallinity.

7. The nonwoven fabric of claim 1, wherein the first component is a random copolymer of propylene and from 10 to 20 weight percent polymerized ethylene based on the total weight of the polymer.

8. The nonwoven fabric of any of the preceding claims, wherein the first component has a heat of fusion as determined by DSC of from 3 J/g to 10 J/g.

9. The nonwoven fabric of any of the preceding claims, wherein the first component has a melting point as determined by DSC of from 35°C to 70°C.

10. The nonwoven fabric of any of the preceding claims, wherein the first component has a molecular weight distribution Mw/Mn of from 2.0 to 4.5.

11. The nonwoven fabric of any of the preceding claims, wherein the first component is present in the composition in an amount of from 75 to 95 wt% and the second component is present in an amount of from 25 to 5 wt%, based on the total weight of the composition.

12. The nonwoven fabric of any of the preceding claims wherein the blend has an ethylene content below 39 mole %.

13. The nonwoven fabric of any of the preceding claims wherein the first component has an MFR of less than 40dg/min. post chain scission.

14. A laminate comprising a nonwoven fabric according to any of the preceding claims.

15. An article or an article component comprising a nonwoven fabric or laminate according to any of the preceding claims.

16. A process for producing a nonwoven fabric, the process comprising:

a) combining

i) a first component comprising from 50% to 99% by weight based on the total weight of the blend composition of a random copolymer of propylene comprising 72 wt% to 90 wt% of propylene derived units and 10 wt% to 28 wt% of ethylene derived units, the polymer having a heat of fusion as determined by DSC of less than 50 J/g and stereoregular propylene crystallinity;
ii) a second component comprising from 50% to 1% by weight based on the total weight of the blend composition of a propylene polymer or blends of propylene polymers having a heat of fusion (DSC) of greater than 60 J/g; and
iii) a free radical initiator,

to form a blend, wherein the blend has a MFR of 50 dg/min. or greater (according to ASTM D-1238 (230°C, 2.16 kg)) and a melting point between 80°C and 100°C; and
b) extruding the blend to form a plurality of fibers to form a web; and
c) calendering the web to form the nonwoven fabric having a permanent set {100x(D0-D2)/D0} of from less than 60%.

17. A process for producing a nonwoven fabric, the process comprising:

a) combining free radical initiator with a first component comprising from 50% to 99% by weight based on the total weight of the blend composition of a random copolymer of propylene comprising 72 wt% to 90 wt% of propylene derived units and 10 wt% to 28 wt% of ethylene derived units, the polymer having a heat of fusion as determined by DSC of less than 50 J/g and stereoregular propylene crystallinity;
b) blending the first component with a second component comprising from 50% to 1% by weight based on the total weight of the blend composition of a propylene polymer or blends of propylene polymers having a heat of fusion (DSC) of greater than 60 J/g; to form a blend composition, wherein the blend has a melting point between 80°C and 100°C;
c) extruding the blend to form a plurality of fibers to form a web; and

calendering the web to form the nonwoven fabric.

18. The process of claims 16 or 17, wherein the nonwoven fabric has an elongation of from greater than 150%.

19. The process of any of claims 16-18, wherein the nonwoven fabric has an elongation of from greater than 300%.

20. The process of any of claims 17-19, wherein the nonwoven fabric demonstrates anisotropic elongation.

21. The process of any of the claims 17-20 wherein the first component has isotactic stereoregular propylene crystallinity.

22. The process of any of claims 17-21, wherein the first component is a random copolymer of propylene and from 10 to 20 weight percent polymerized ethylene based on the total weight of the polymer.

23. The process of any of claims 17-22 wherein the first component has a heat of fusion as determined by DSC of from 3 J/g to 15 J/g.

24. The process of any of claims 17-23 wherein the first component has a melting point as determined by DSC of from 35°C to 70°C.

25. The process of any of claims 17-24 wherein the first component has a molecular weight distribution Mw/Mn of from 2.0 to 4.5.

26. The process of any of claims 17-25 wherein the first component is present in the composition in an amount of from 75 to 95 wt% and the second component is present in an amount of from 25 to 5 wt%, based on the total weight of the composition.

27. The process of any of claims 17-26 wherein both the first and second components are subjected to chain scission

thereby reducing MFR by at least 100%.

**28.** The process of any of claims 17-27 wherein the blend has a MFR of greater than 50 dg/min. (according to ASTM D-1238 (230°C , 2.16 kg)).

**29.** The process of any of claims 17-28 wherein the blend has an ethylene content below 39 mole %.

## Patentansprüche

**1.** Vliesstoff hergestellt aus einem Gemisch umfassend:

eine erste Komponente, die von 50 Gew.-% bis 99 Gew.-%, bezogen auf das Gesamtgewicht der Gemischzusammensetzung, eines statistischen Copolymers von Propylen umfasst, das 72 Gew.-% bis 90 Gew.-% von Propylen abgeleitete Einheiten und 10 Gew.-% bis 28 Gew.-% von Ethylen abgeleitete Einheiten umfasst, wobei das Copolymer eine mittels DSC bestimmte Schmelzwärme von weniger als 50 J/g und stereoreguläre Propylenkristallinität aufweist, und
eine zweite Komponente, die von 50 Gew.-% bis 1 Gew.-%, bezogen auf das Gesamtgewicht der Gemischzusammensetzung, eines Propylen-Polymers oder Gemische von Propylen-Polymeren umfasst, wobei das Propylen-Polymer oder die Gemische von Propylen-Polymeren eine mittels DSC bestimmte Schmelzwärme von mehr als 60 J/g aufweisen,
wobei das Gemisch einen Schmelzpunkt zwischen 80°C und 100°C aufweist und wobei das Gemisch Kettenspaltung unterzogen worden ist, wobei das kettengespaltene Gemisch eine MFR von 50 dg/min oder mehr (gemäß ASTM D-1238 (230°C, 2,16 kg)) aufweist und wobei der Vliesstoff eine bleibende Verformung {100x(D0-D2/D0} von weniger als 60% aufweist.

**2.** Vliesstoff nach Anspruch 1, der eine bleibende Verformung {100x(D0-D2)/D0} von weniger als 15% aufweist.

**3.** Vliesstoff nach Anspruch 1 oder 2, wobei der Vliesstoff eine Dehnungsfähigkeit von mehr als 150% aufweist.

**4.** Vliesstoff nach Anspruch 1, wobei der Vliesstoff eine Dehnungsfähigkeit von mehr als 300% aufweist.

**5.** Vliesstoff nach einem der vorhergehenden Ansprüche, wobei der Vliesstoff anisotrope Dehnung aufweist.

**6.** Vliesstoff nach einem der vorhergehenden Ansprüche, wobei die erste Komponente isotaktische stereoreguläre Propylenkristallinität aufweist.

**7.** Vliesstoff nach Anspruch 1, wobei die erste Komponente ein statistisches Copolymer von Propylen ist und von 10 bis 20 Gew.-%, bezogen auf das Gesamtgewicht des Polymers, polymerisiertes Ethylen aufweist.

**8.** Vliesstoff nach einem der vorhergehenden Ansprüche, wobei die erste Komponente eine mittels DSC bestimmte Schmelzwärme von 3 J/g bis 10 J/g aufweist.

**9.** Vliesstoff nach einem der vorhergehenden Ansprüche, wobei die erste Komponente einen mittels DSC bestimmten Schmelzpunkt von 35°C bis 70°C aufweist.

**10.** Vliesstoff nach einem der vorhergehenden Ansprüche, wobei die erste Komponente eine Molekulargewichtsverteilung Mw/Mn von 2.0 bis 4.5 aufweist.

**11.** Vliesstoff nach einem der vorhergehenden Ansprüche, wobei die erste Komponente in der Zusammensetzung in einer Menge von 75 bis 95 Gew.-% vorhanden ist und die zweite Komponente in einer Menge von 25 bis 5 Gew.-% vorhanden ist, bezogen auf das Gesamtgewicht der Zusammensetzung.

**12.** Vliesstoff nach einem der vorhergehenden Ansprüche, wobei das Gemisch einen Ethylengehalt von weniger als 39 mol-% aufweist.

**13.** Vliesstoff nach einem der vorhergehenden Ansprüche, wobei die erste Komponente eine MFR von weniger als 40 dg/min nach Kettenspaltung aufweist.

**14.** Laminat, das einen Vliesstoff nach einem der vorhergehenden Ansprüche umfasst.

**15.** Artikel oder Artikelkomponente, die einen Vliesstoff oder Laminat nach einem der vorhergehenden Ansprüche umfasst.

**16.** Verfahren zur Herstellung eines Vliesstoffes umfassend:

a) Kombinieren

i) einer ersten Komponente, die von 50 Gew.-% bis 99 Gew.-%, bezogen auf das Gesamtgewicht der Gemischzusammensetzung, eines statistischen Copolymers von Propylen umfasst, das 72 Gew.-% bis 90 Gew.-% von Propylen abgeleitete Einheiten und 10 Gew.-% bis 28 Gew.-% von Ethylen abgeleitete Einheiten umfasst, wobei das Copolymer eine mittels DSC bestimmte Schmelzwärme von weniger als 50 J/g und stereoreguläre Propylenkristallinität aufweist,
ii) einer zweiten Komponente, die von 50 Gew.-% bis 1 Gew.-%, bezogen auf das Gesamtgewicht der Gemischzusammensetzung, eines Propylen-Polymers oder Gemische von Propylen-Polymeren mit einer Schmelzwärme (DSC) von mehr als 60 J/g und
iii) eines Initiators auf Basis freier Radikale,

um ein Gemisch zu bilden, das eine MFR von 50 dg/min oder mehr (gemäß ASTM D-1238 (230 °C, 2,16 kg)) und einen Schmelzpunkt zwischen 80 °C und 100 °C aufweist, und
b) Extrudieren des Gemisches, um unter Bildung einer Bahn eine Vielzahl von Fasern zu bilden und
c) Kalandrieren der Bahn, um einen Vliesstoff mit einer bleibenden Verformung {100x(D0-D2)/D0} von weniger als 60% zu bilden.

**17.** Verfahren zur Herstellung eines Vliesstoffes umfassend:

a) Kombinieren eines Initiators auf Basis freier Radikale mit einer ersten Komponente, die von 50 Gew.-% bis 99 Gew.-%, bezogen auf das Gesamtgewicht der Gemischzusammensetzung, eines statistischen Copolymers von Propylen umfasst, das 72 Gew.-% bis 90 Gew.-% von Propylen abgeleitete Einheiten und 10 Gew.-% bis 28 Gew.-% von Ethylen abgeleitete Einheiten umfasst, wobei das Copolymer eine mittels DSC bestimmte Schmelzwärme von weniger als 50 J/g und stereoreguläre Propylenkristallinität aufweist,
b) Mischen der ersten Komponente mit einer zweiten Komponente, die von 50 Gew.-% bis 1 Gew.-%, bezogen auf das Gesamtgewicht der Gemischzusammensetzung, eines Propylen-Polymers oder Gemische von Propylen-Polymeren mit einer Schmelzwärme (DSC) von mehr als 60 J/g umfasst, um eine Gemischzusammensetzung zu bilden, in der das Gemisch einen Schmelzpunkt zwischen 80 °C und 100 °C aufweist,
c) Extrudieren des Gemisches, um unter Bildung einer Bahn eine Vielzahl von Fasern zu bilden und

Kalandrieren der Bahn, um den Vliesstoff zu bilden.

**18.** Verfahren nach Anspruch 16 oder 17, wobei der Vliesstoff eine Dehnungsfähigkeit von mehr als 150% aufweist.

**19.** Verfahren nach einem der Ansprüche 16-18, wobei der Vliesstoff eine Dehnungsfähigkeit von mehr als 300% aufweist.

**20.** Verfahren nach einem der Ansprüche 17-19, wobei der Vliesstoff anisotrope Dehnung aufweist.

**21.** Verfahren nach einem der Ansprüche 17-20, wobei die erste Komponente isotaktische stereoreguläre Propylenkristallinität aufweist.

**22.** Verfahren nach einem der Ansprüche 17-20, wobei die erste Komponente ein statistisches Copolymer von Propylen ist und von 10 bis 20 Gew.-%, bezogen auf das Gesamtgewicht des Polymers, polymerisiertes Ethylen umfasst.

**23.** Verfahren nach einem der Ansprüche 17-22, wobei die erste Komponente eine mittels DSC bestimmte Schmelzwärme von 3 J/g bis 15 J/g aufweist.

**24.** Verfahren nach einem der Ansprüche 17-23, wobei die erste Komponente einen mittels DSC bestimmten Schmelzpunkt von 35°C bis 70°C aufweist.

**25.** Verfahren nach einem der Ansprüche 17-24, wobei die erste Komponente eine Molekulargewichtsverteilung Mw/Mn von 2.0 bis 4.5 aufweist.

**26.** Verfahren nach einem der Ansprüche 17-25, wobei die erste Komponente in einer Menge von 75 bis 95 Gew.-% und die zweite Komponente in einer Menge von 25 bis 5 Gew.-%, bezogen auf das Gesamtgewicht der Zusammensetzung, vorhanden ist.

**27.** Verfahren nach einem der Ansprüche 17-26, wobei die erste und die zweite Komponente Kettenspaltung unterzogen worden sind, wodurch die MFR um mindestens 100% verringert wird.

**28.** Verfahren nach einem der Ansprüche 17-27, wobei das Gemisch eine MFR von mehr als 50 dg/min (gemäß ASTM D-1238 (230 °C, 2,16 kg)) aufweist.

**29.** Verfahren nach einem der Ansprüche 17-28, wobei das Gemisch einen Ethylengehalt von weniger als 39 mol-% aufweist.

**Revendications**

**1.** Tissu non tissé fabriqué à partir d'un mélange comprenant :

un premier constituant comprenant de 50% à 99% en poids, par rapport au poids total de la composition de mélange, d'un copolymère statistique de propylène comprenant 72 % en poids à 90 % en poids de motifs dérivés de propylène et 10 % en poids à 28 % en poids de motifs dérivés d'éthylène, le copolymère possédant une chaleur de fusion, déterminée par DSC, de moins de 50 J/g et une cristallinité de propylène stéréorégulier ; et
un deuxième constituant comprenant de 50% à 1% en poids, par rapport au poids total de la composition de mélange, d'un polymère de propylène ou de mélanges de polymères de propylène, le polymère de propylène ou les mélanges de polymères de propylène possédant une chaleur de fusion, déterminée par DSC, de plus de 60 J/g ;
dans lequel le mélange possède un point de fusion entre 80°C et 100°C, et dans lequel le mélange a subi une scission des chaînes, le mélange ayant subi une scission des chaînes possédant un MFR de 50 dg/min ou plus (selon ASTM D-1238 (230°C, 2,16 kg)), et dans lequel le tissu non tissé possède une déformation permanente {100x(D0-D2)/D0} de moins de 60%.

**2.** Tissu non tissé selon la revendication 1 possédant une déformation permanente {100x(D0-D2)/D0} de moins de 15%.

**3.** Tissu non tissé selon les revendications 1 ou 2, dans lequel le tissu non tissé possède un allongement de plus de 150%.

**4.** Tissu non tissé selon la revendication 1, dans lequel le tissu non tissé possède un allongement de plus de 300%.

**5.** Tissu non tissé selon l'une quelconque des revendications précédentes, dans lequel le tissu non tissé présente un allongement anisotrope.

**6.** Tissu non tissé selon l'une quelconque des revendications précédentes, dans lequel le premier constituant possède une cristallinité de propylène stéréorégulier isotactique.

**7.** Tissu non tissé selon la revendication 1, dans lequel le premier constituant est un copolymère statistique de propylène et de 10 à 20 pour cent en poids d'éthylène polymérisé par rapport au poids total du polymère.

**8.** Tissu non tissé selon l'une quelconque des revendications précédentes, dans lequel le premier constituant possède une chaleur de fusion, déterminée par DSC, de 3 J/g à 10 J/g.

**9.** Tissu non tissé selon l'une quelconque des revendications précédentes, dans lequel le premier constituant possède un point de fusion, déterminé par DSC, de 35°C à 70°C.

**10.** Tissu non tissé selon l'une quelconque des revendications précédentes, dans lequel le premier constituant possède une distribution des masses moléculaires Mw/Mn de 2,0 à 4,5.

**11.** Tissu non tissé selon l'une quelconque des revendications précédentes, dans lequel le premier constituant est présent dans la composition en quantité de 75 à 95 % en poids et le deuxième constituant est présent en quantité de 25 à 5 % en poids, par rapport au poids total de la composition.

**12.** Tissu non tissé selon l'une quelconque des revendications précédentes dans lequel le mélange possède une teneur en éthylène inférieure à 39 % en moles.

**13.** Tissu non tissé selon l'une quelconque des revendications précédentes dans lequel le premier constituant possède un MFR de moins de 40 dg/min après la scission des chaînes.

**14.** Stratifié comprenant un tissu non tissé selon l'une quelconque des revendications précédentes.

**15.** Article ou constituant d'un article comprenant un tissu non tissé ou stratifié selon l'une quelconque des revendications précédentes.

**16.** Procédé de production d'un tissu non tissé, le procédé comprenant les étapes consistant à :

a) combiner

i) un premier constituant comprenant de 50% à 99% en poids, par rapport au poids total de la composition de mélange, d'un copolymère statistique de propylène comprenant 72 % en poids à 90 % en poids de motifs dérivés de propylène et 10 % en poids à 28 % en poids de motifs dérivés d'éthylène, le polymère possédant une chaleur de fusion, déterminée par DSC, de moins de 50 J/g et une cristallinité de propylène stéréorégulier ;
ii) un deuxième constituant comprenant de 50% à 1% en poids, par rapport au poids total de la composition de mélange, d'un polymère de propylène ou de mélanges de polymères de propylène possédant une chaleur de fusion (DSC) de plus de 60 J/g ; et
iii) un amorceur radicalaire,

pour former un mélange, dans lequel le mélange possède un MFR de 50 dg/min ou plus (selon ASTM D-1238 (230°C, 2,16 kg)) et un point de fusion entre 80°C et 100°C ; et
b) extruder le mélange pour former une pluralité de fibres pour former un voile ; et
c) calandrer le voile pour former le tissu non tissé possédant une déformation permanente {100x(D0-D2)/D0} de moins de 60%.

**17.** Procédé de production d'un tissu non tissé, le procédé comprenant les étapes consistant à :

a) combiner l'amorceur radicalaire avec un premier constituant comprenant de 50% à 99% en poids, par rapport au poids total de la composition de mélange, d'un copolymère statistique de propylène comprenant 72 % en poids à 90 % en poids de motifs dérivés de propylène et 10 % en poids à 28 % en poids de motifs dérivés d'éthylène, le polymère possédant une chaleur de fusion, déterminée par DSC, de moins de 50 J/g et une cristallinité de propylène stéréorégulier ;
b) mélanger le premier constituant avec un deuxième constituant comprenant de 50 % à 1 % en poids, par rapport au poids total de la composition de mélange, d'un polymère de propylène ou de mélanges de polymères de propylène possédant une chaleur de fusion (DSC) de plus de 60 J/g ; pour former une composition de mélange, dans lequel le mélange possède un point de fusion entre 80°C et 100°C ;
c) extruder le mélange pour former une pluralité de fibres pour former un voile ; et

calandrer le voile pour former le tissu non tissé.

**18.** Procédé selon les revendications 16 ou 17, dans lequel le tissu non tissé possède un allongement de plus de 150%.

**19.** Procédé selon les revendications 16-18, dans lequel le tissu non tissé possède un allongement de plus de 300%.

**20.** Procédé selon les revendications 17-19, dans lequel le tissu non tissé présente un allongement anisotrope.

**21.** Procédé selon l'une quelconque des revendications 17-20 dans lequel le premier constituant possède une cristallinité isotactique de propylène stéréorégulier.

**22.** Procédé selon les revendications 17-21, dans lequel le premier constituant est un copolymère statistique de propylène et de 10 à 20 pour cent en poids d'éthylène polymérisé par rapport au poids total du polymère.

**23.** Procédé selon les revendications 17-22 dans lequel le premier constituant possède une chaleur de fusion, déterminée par DSC, de 3 J/g à 15 J/g.

**24.** Procédé selon les revendications 17-23 dans lequel le premier constituant possède un point de fusion, déterminé par DSC, de 35°C à 70°C.

**25.** Procédé selon les revendications 17-24 dans lequel le premier constituant possède une distribution des masses moléculaires Mw/Mn de 2,0 à 4,5.

**26.** Procédé selon les revendications 17-25 dans lequel le premier constituant est présent dans la composition en quantité de 75 à 95 % en poids et le deuxième constituant est présent en quantité de 25 à 5 % en poids, par rapport au poids total de la composition.

**27.** Procédé selon les revendications 17-26 dans lequel les premier et deuxième constituants sont tous deux soumis à une scission des chaînes de façon à réduire le MFR d'au moins 100%.

**28.** Procédé selon les revendications 17-27 dans lequel le mélange possède un MFR de plus de 50 dg/min (selon ASTM D-1238 (230°C, 2,16 kg)).

**29.** Procédé selon les revendications 17-28 dans lequel le mélange possède une teneur en éthylène inférieure à 39 % en moles.

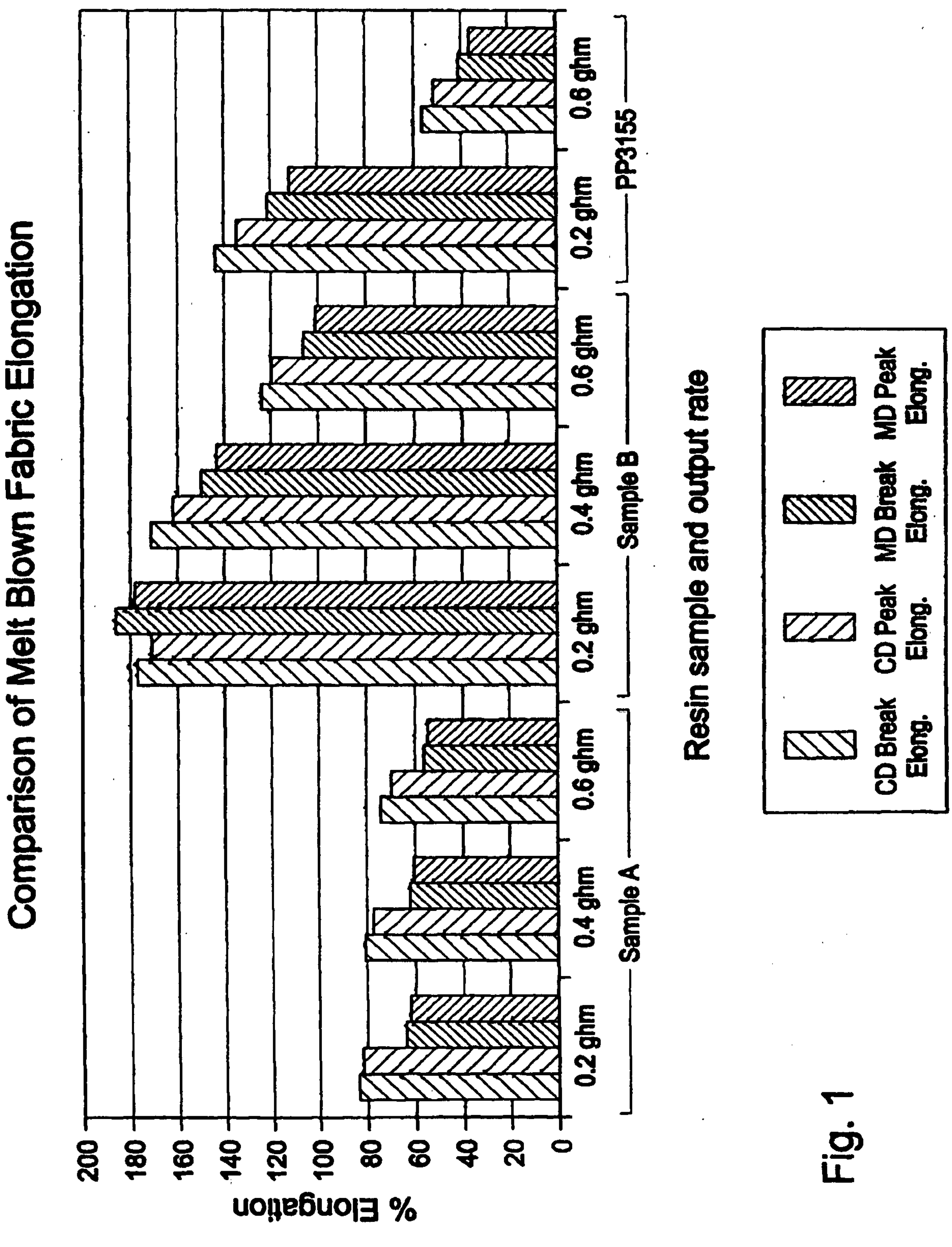
Comparison of Melt Blown Fabric Elongation
% Elongation
200
180
160
140
120
100
80
60
40
20
0
0.2 ghm
0.4 ghm
0.6 ghm
0.2 ghm
0.4 ghm
0.6 ghm
0.2 ghm
0.6 ghm
Sample A
Sample B
PP3155
Resin sample and output rate
CD Break Elong.
CD Peak Elong.
MD Break Elong.
MD Peak Elong.

Fig. 1

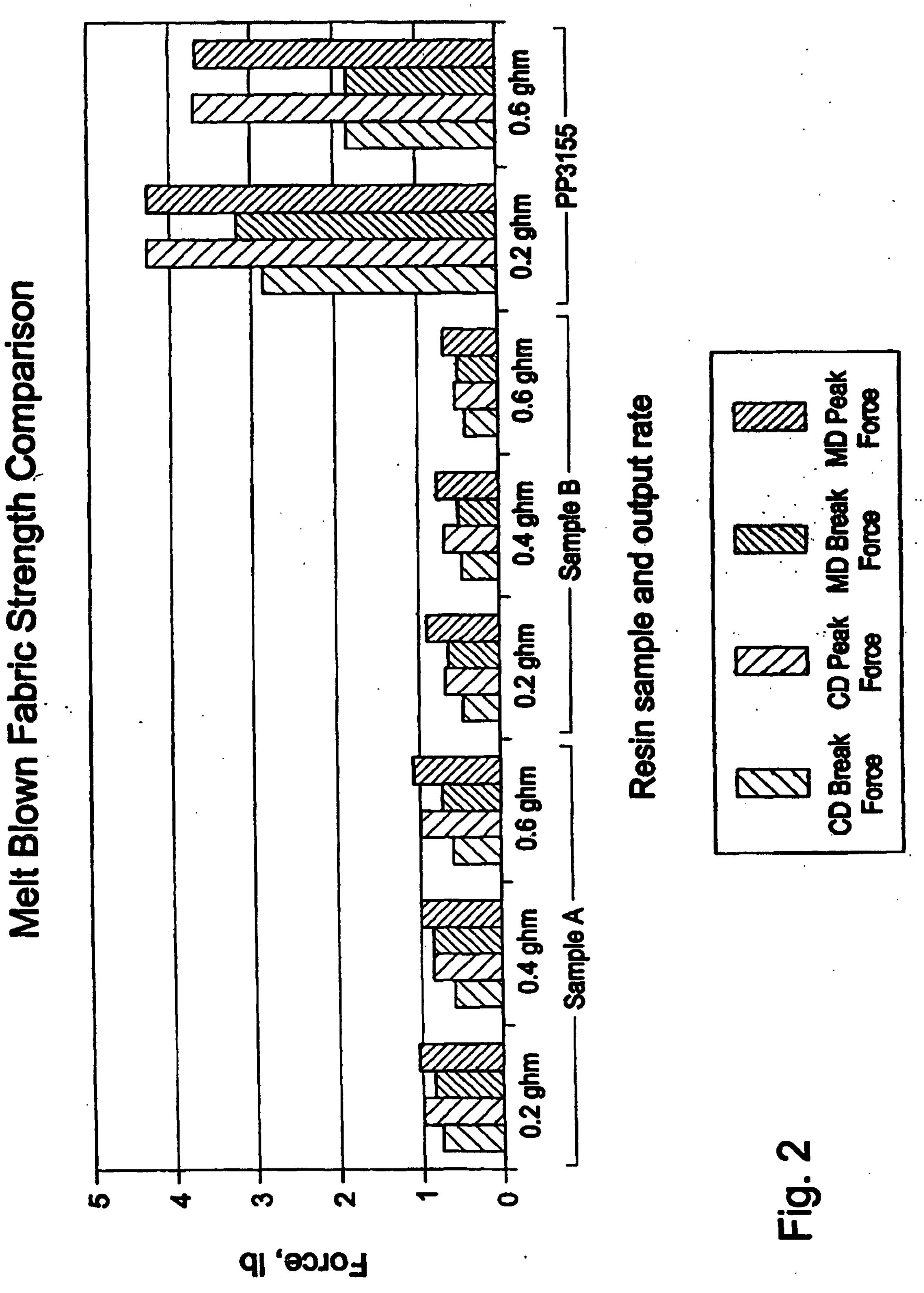
Melt Blown Fabric Strength Comparison
Force, lb
0
1
2
3
4
5
0.2 ghm
0.4 ghm
0.6 ghm
Sample A
Sample B
PP3155
Resin sample and output rate
CD Break Force
CD Peak Force
MD Break Force
MD Peak Force

Fig. 2

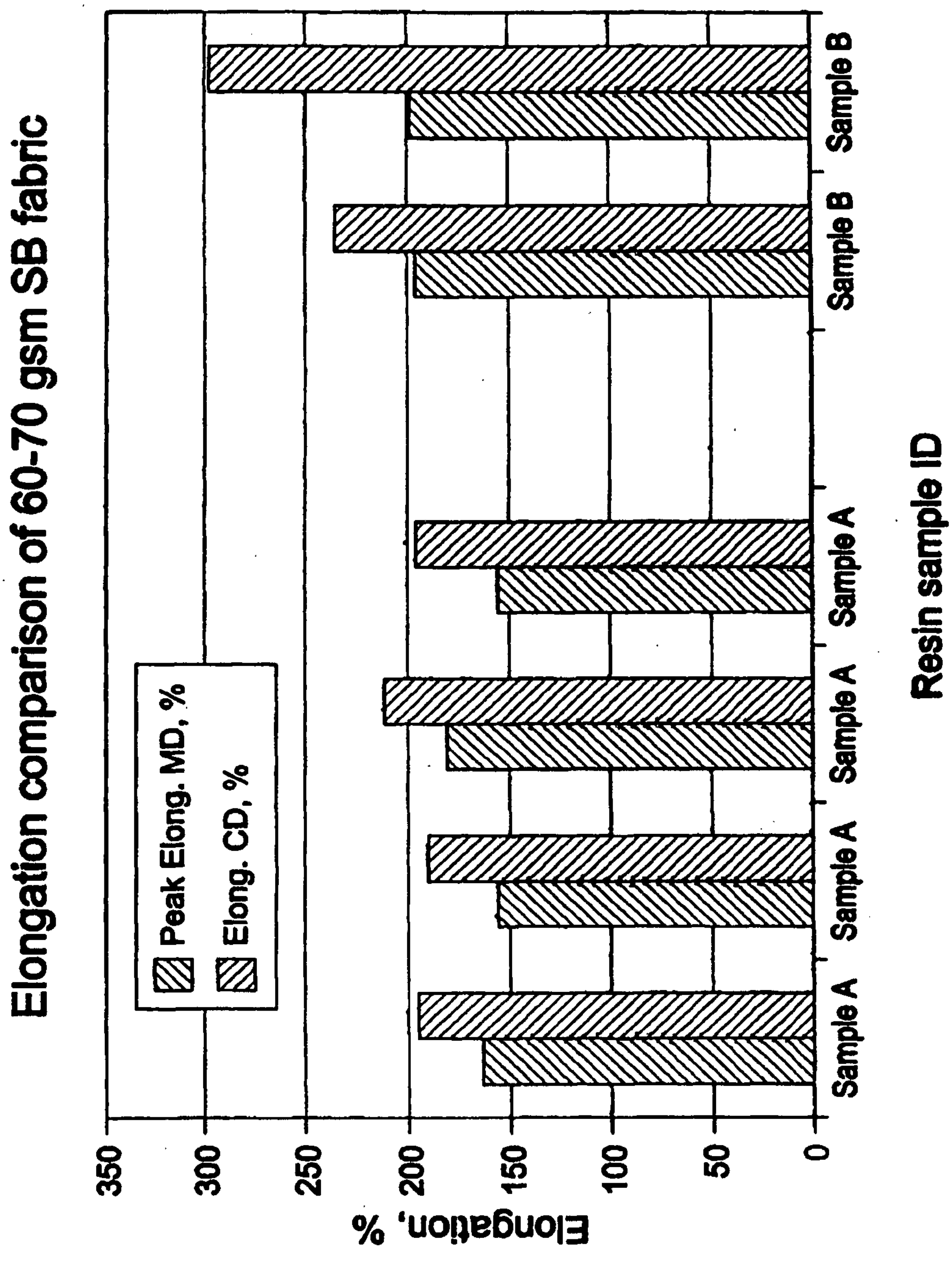
Elongation comparison of 60-70 gsm SB fabric
Peak Elong. MD, %
Elong. CD, %
Elongation, %
350
300
250
200
150
100
50
0
Sample A
Sample A
Sample A
Sample A
Sample B
Sample B
Resin sample ID

Fig. 3

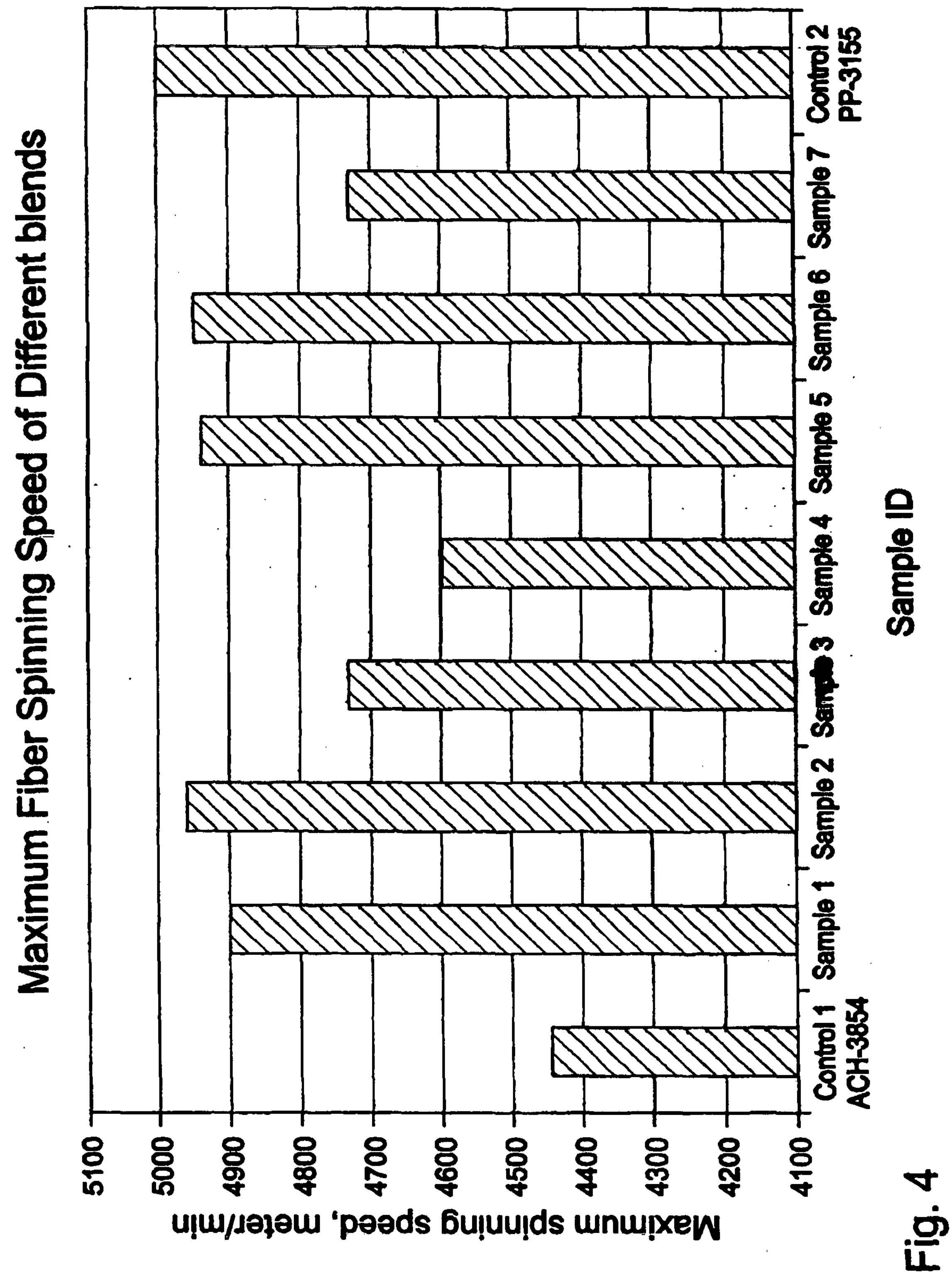
Maximum Fiber Spinning Speed of Different blends
Maximum spinning speed, meter/min
5100
5000
4900
4800
4700
4600
4500
4400
4300
4200
4100
Control 1 ACH-3854
Sample 1
Sample 2
Sample 3
Sample 4
Sample 5
Sample 6
Sample 7
Control 2 PP-3155
Sample ID

Fig. 4

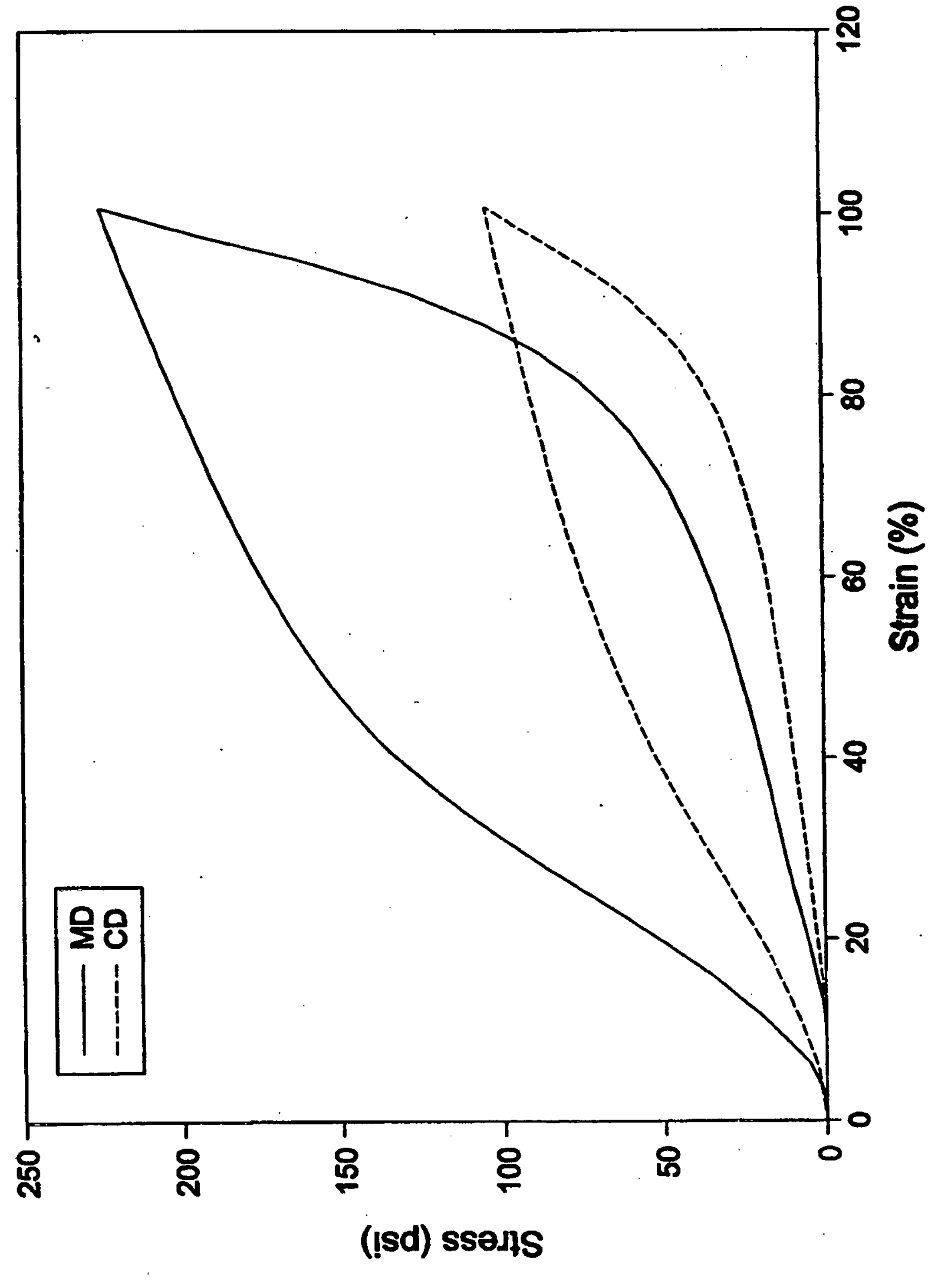


Fig. 5

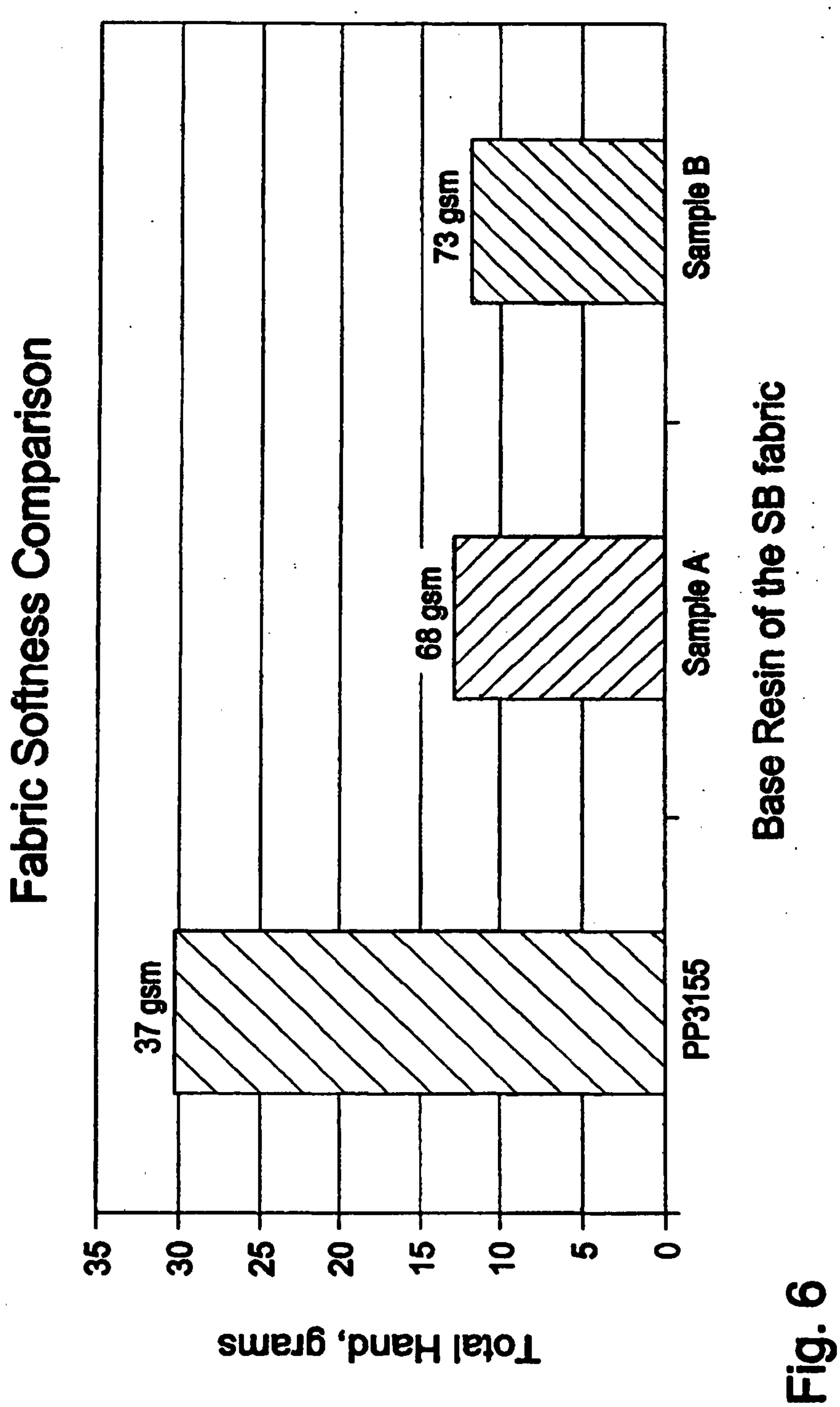
Fabric Softness Comparison
Total Hand, grams
35
30
25
20
15
10
5
0
37 gsm
68 gsm
73 gsm
PP3155
Sample A
Sample B
Base Resin of the SB fabric

Fig. 6

**Figure 7. Comparison of Max. Draw Force**

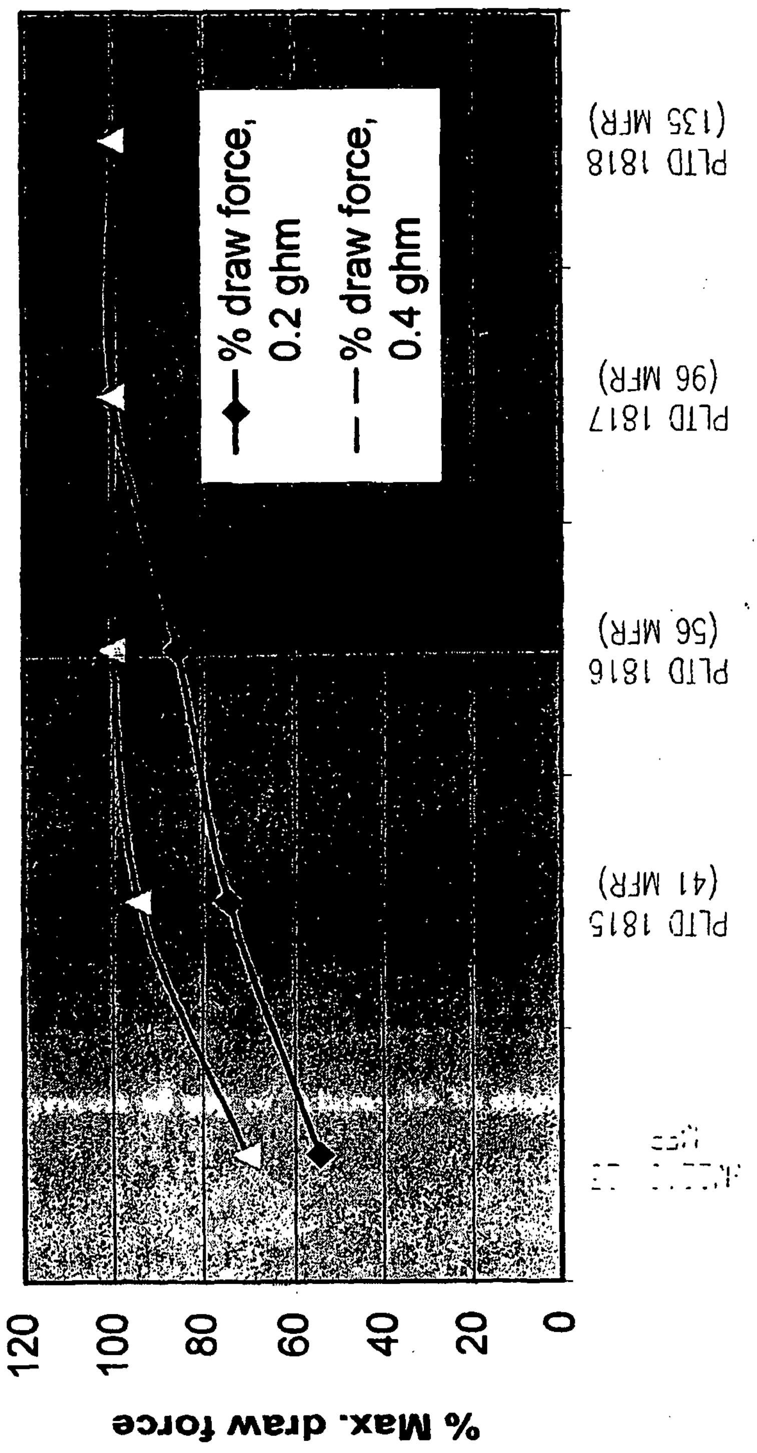

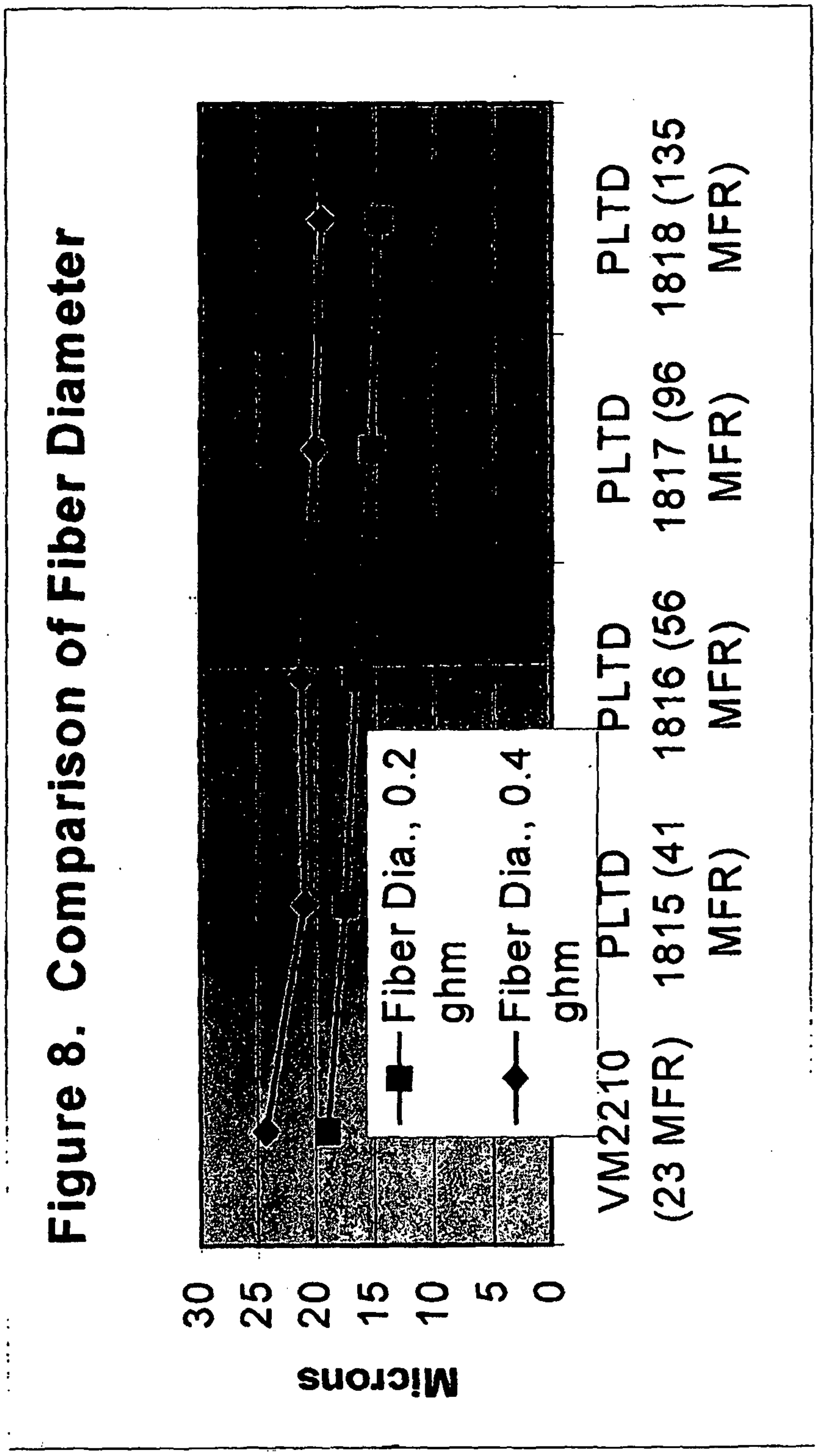


Figure 8. Comparison of Fiber Diameter

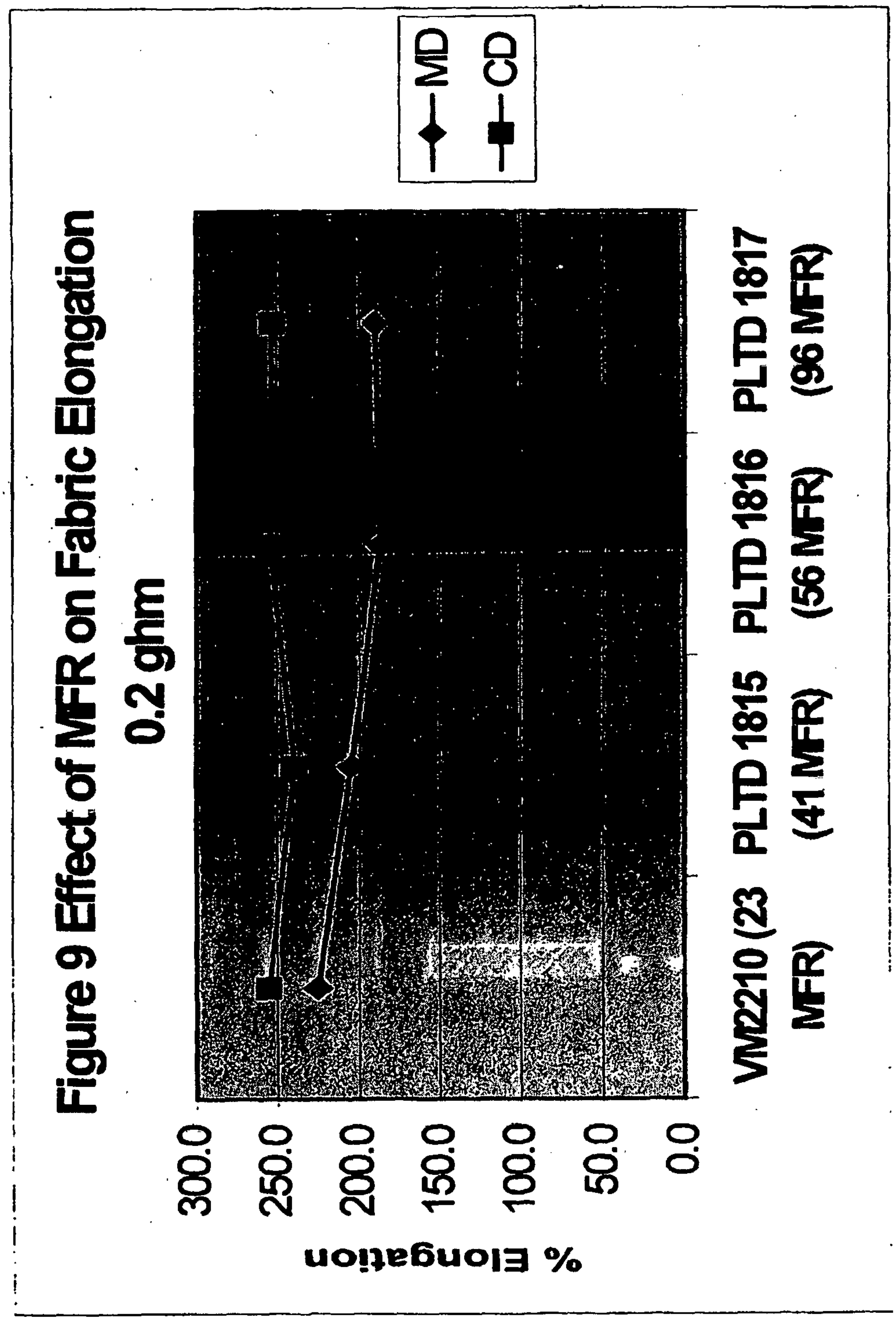
Figure 9 Effect of MFR on Fabric Elongation
0.2 ghm
MD
CD
% Elongation
300.0
250.0
200.0
150.0
100.0
50.0
0.0
VM2210 (23 MFR)
PLTD 1815 (41 MFR)
PLTD 1816 (56 MFR)
PLTD 1817 (96 MFR)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 3262992 A
- US 3853969 A
- US 3378606 A
- US 3882197 A
- US 3888949 A
- US 4461872 A
- US 5723217 A
- US 5726103 A
- US 5736465 A
- US 5763080 A
- US 6010588 A
- US 5891814 A
- WO 9919547 A
- US 6342565 B
- WO 03040202 A
- EP 0462574 A
- US 5683076 B
- US 5994482 A
- WO 0070134 A
- US 5683076 A
- US 4041203 A
- US 5169706 A
- US 5145727 A
- US 5178931 A
- US 5188885 A
- US 4540753 A
- US 4820142 A
- US 5504172 A
- WO 0234795 A
- US 5026798 A
- US 4522982 A
- US 5747621 A
- US 5969070 A
- US 6048950 A
- WO 9827154 A
- EP 1070087 A
- US 6448358 B
- US 6265212 B
- EP 277004 A
- EP 426637 A
- EP 426638 A
- WO 0069963 A
- WO 0001766 A
- WO 9907788 A
- WO 02083753 A
- WO 0001745 A
- US 5198401 A
- US 5145819 A
- US 5304614 A
- US 5243001 A
- US 5239022 A
- US 5329033 A
- US 5296434 A
- US 5276208 A
- US 5672668 A
- US 5374752 A
- EP 549900 A
- EP 576970 A
- US 5057475 A
- US 5153157 A
- US 6747114 B2
- US 5290886 A, Ellul
- US 5397832 A


### Non-patent literature cited in the description


- *the journal of Macromolecules,* 1989, vol. 22, 3851-3866
- HAWLEY'S CONDENSED CHEMICAL DICTIONARY. 1997, 852
- *Macromolecules,* 1988, vol. 21, 3360
- **WHEELER ; WILLIS.** *Applied Spectroscopy,* 1993, vol. 47, 1128-1130
- **VERSTRATE et al.** *Macromolecules,* 1988, vol. 21, 3360
- **H.N. CHENG.** *Macromolecules,* 1984, vol. 17, 1950
- *Polymer,* 1989, vol. 30, 1350
- **SASSMANNSHAUSEN ; BOCHMANN ; ROSCH ; LILGE.** *J.Organomet. Chem.,* 1997, vol. 548, 23-28